(19) Europäisches Patentamt
European Patent Office
Office européen des brevets

(11) **EP 4 158 081 B1**

(12) **EUROPEAN PATENT SPECIFICATION**

(45) Date of publication and mention
of the grant of the patent:
**17.07.2024 Bulletin 2024/29**

(21) Application number: **21731600.9**

(22) Date of filing: **31.05.2021**

(51) International Patent Classification (IPC):
*C23F 11/10* (2006.01)    *C23F 11/14* (2006.01)
*G01N 21/27* (2006.01)    *F22B 35/00* (2006.01)

(52) Cooperative Patent Classification (CPC):
**C23F 11/145; C23F 11/10;** C02F 2303/08

(86) International application number:
**PCT/JP2021/020691**

(87) International publication number:
**WO 2021/246367 (09.12.2021 Gazette 2021/49)**

(54) **METHOD FOR PROVIDING CORROSION PROTECTION TO A PRESSURIZED WATER-STEAM SYSTEM**

VERFAHREN ZUR BEREITSTELLUNG EINES KORROSIONSSCHUTZES FÜR EIN DRUCKWASSER-DAMPF-SYSTEM

PROCÉDÉ POUR FOURNIR UNE PROTECTION CONTRE LA CORROSION À UN SYSTÈME EAU-VAPEUR SOUS PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.06.2020 PCT/JP2020/021594**

(43) Date of publication of application:
**05.04.2023 Bulletin 2023/14**

(73) Proprietor: **Kurita Water Industries Ltd.**
**Tokyo 164-0001 (JP)**

(72) Inventors:
• **JASPER Julia**
**68165 Mannheim (DE)**

• **DISCI Duygu**
**68165 Mannheim (DE)**
• **DE BACHE Andre**
**68165 Mannheim (DE)**
• **URSCHEY Michael**
**68165 Mannheim (DE)**

(74) Representative: **Meissner Bolte Partnerschaft mbB**
**Patentanwälte Rechtsanwälte**
**Postfach 86 06 24**
**81633 München (DE)**

(56) References cited:
**EP-A2- 1 092 788    WO-A2-2005/052213**
**JP-A- S6 013 084    JP-A- S63 216 985**
**US-A- 5 397 534**

**Description**

**Technical Field**

The present invention relates to a method for providing corrosion protection to a pressurized water-steam system using N-acylsarcosines or a salt thereof in very low amounts.

The invention relates moreover to a method for determining the concentration of an N-acylsarcosine in an aqueous solution or emulsion.

**Background of the invention**

Water-steam systems, in particular water-steam circuits and steam generators in general, e.g. steam generators in electrical power plants, require water treatment in order to prevent damage of the surfaces in contact with water by corrosion.

Organic water additives based on film-forming amines (FFA) provide an excellent anti-corrosion protection for water-steam systems. This holds true especially for plants operating in cycle mode where preservation is required during shutdowns and protection of the parts both in contact with water and in dry state must be maintained. Film forming amines are characterized in that they bear at least one long-chain alkyl- or alkenyl group and have one or more amino groups. The film-forming amines form a protective layer between metal or metal oxide surfaces and the corrosive medium. It is assumed that the polar amino group undergoes chemisorption to the metal(oxide) surface and the lipophilic long-chain alkyl- or alkenyl groups make the surface unwettable against water, thus keeping corrosive substances at bay.

From a power plant manufacturer or operator's point of view, any organic matter in the steam-water cycle brings however the risk of detrimental side effects. Possible side effects include corrosive degradation products, interference with monitoring cation conductivity, influence on boiling and on condensation, or fouling. Organic amines, for example, produce volatile acidic degradation products which lower the pH and thus promote corrosion (although the amino group of intact amines may somewhat counterbalance acidity). It is therefore desirable to restrict the general use of organic additives to the minimum possible.

The concentration of FFAs can however not be restricted beyond a certain limit without unacceptable loss of activity.

Another concern with FFAs is their toxicity. Oleyl amine is for example classified as a health and environmental hazard. It may cause damage to organs through prolonged or repeated exposure and may be fatal if swallowed or inhaled. Moreover it is very toxic to aquatic life with long lasting effects. While this risk may be manageable for example in closed steam-water circuits in electrical power plants, it is obvious that for water-steam cycles used directly or indirectly in context with the processing of food, cosmetics or pharmaceuticals it is desirable to avoid such hazards. But also in systems which are not in any direct or indirect contact with materials for which toxicity is not acceptable, it is desirable to avoid the use of hazardous materials, since every water is released eventually into the environment. This holds even more true for geothermal systems, such as geothermal power plants or a geothermal heating units, where after power production/heating the water is released into the environment, often into deep underground where its further movement and influence, e.g. into/on groundwater, cannot be not controlled.

N-acylsarcosines are the carboxamides of carboxylic acids with sarcosine (N-methylglycine). They have been described as components of corrosion inhibitor compositions.

DE-A-1916628 describes a mixture containing A) 57-89.5% by weight of the reaction product of a sulfochloride with ammonia or a primary lower amine followed by the reaction with a halogen carboxylic acid or the reaction product of a sulfochloride with an aminocarboxylic acid with 2-9 carbon atoms in the presence of a base; or salts of these reaction products; B) 5-30% by weight of a fatty acid acyl sarcosinate with an alkali metal or an ammonium counteraction; C) 5-10% by weight of cyclohexyl amine; and D) 0.5-3% by weight of benzotriazole and/or 2-mercaptobenzothiazole as anti-corrosion agent. The mixture is added in an amount of 0.05-5% by weight; corresponding to an amount of at least 25 ppm of the sarcosinate. In the examples, the sarcosinate is used in an amount of 250-750 ppm when used in form of the claimed composition. In a comparative example, where it is used alone, the dosage is 5000 ppm. In the examples, no pressurized system is employed.

JP S57-185988 relates to an anticorrosive composition comprising polymaleic acid or a salt thereof and a sarcosine compound $R-C(O)-N(CH_3)-CH_2-COOH$, wherein R is $C_8 - C_{22}$-hydrocarbyl. In the examples, the sarcosine compound is used in an amount of 4-30 ppm when used in form of the claimed composition. In the comparative examples, where it is used alone, the dosage is 40 ppm. In the examples, a mild steel test piece is rotated in test water at 50°C or 90°C for 5 days. No pressurized system is described or employed. The anti-corrosive effect is tested only on the steel test piece in the boiler water and on the walls of the beaker in which the test water is boiled. Anti-corrosion behaviour in steam or condensate or parts in contact therewith is not tested.

EP-A-1092788 relates to a corrosion-inhibiting formulation containing an acyl amino acid and a triazole derivative. The definition of the acyl amino acid encompasses N-acylsarcosines. In the examples, the formulation is used in an overall amount of 0.2% by weight. Considering the mixing ratios of the N-acylsarcosine and the triazole derivative as given in Table 1 of this reference, the N-acylsarcosine is used in an amount of ca. 0.09 to 0.13% by weight (corresponding to 900-1300 ppm).

The use of an N-acyl sarcosine compound including N-oleyl sarcosine, N-lauroyl sarcosine, N-myristoyl sarcosine and salts thereof to prevent corrosion of metals in boiler water systems is described in JP S60 13084 A.

JP S63 216985 A and WO 2005/052213 A2 disclose each a method for providing corrosion protection to a pressurized steam generator operating at high pressure.

A method for controlling and minimizing corrosion on the secondary side of a pressurized water reactor steam generator for ensuring the long-term integrity of a steam generator in a pressurized water reactor is described in US 5397534 A.

**Summary of the invention**

It was the object of the present invention to provide an anti-corrosion agent which allows corrosion protection in pressurized water-steam systems with distinctly lower amounts of active agent. Corrosion protection should be provided also and especially to those parts of the system which come into contact with steam and condensate, also when the agent was added to the feed water only. Moreover, the agent should be non-toxic or at least distinctly less toxic than the FFAs. Effective corrosion protection should also be obtainable with the agent used alone or at the most in combination with an alkalizing amine; i.e. the mixing partners of the DE-A-1916628, JP S57-185988 and EP-A-1092788 compositions should not be necessary for obtaining these effects.

The object is achieved by the use of certain N-acylsarcosinates in (overall) amounts of at most 10 ppm as anti-corrosion agents.

The invention relates thus to a method for providing corrosion protection to a pressurized water-steam system, which method comprises the addition of an N-acylsarcosine compound of the formula (I) or of a mixture of different N-acylsarcosine compounds of the formula (I)

$$R\text{-}C(=O)\text{-}N(CH_3)\text{-}CH_2\text{-}COOH \qquad (I)$$

where R is a linear or branched acyclic hydrocarbon group having 10 to 24 carbon atoms, or of a salt thereof; where in case that a mixture of different N-acylsarcosine compounds of the formula (I) is used, in up to 30% by weight of the N-acylsarcosine compounds (I), based on the total weight of the mixture, R may also be a linear or branched acyclic hydrocarbon group having 4 to 9 carbon atoms;

where the N-acylsarcosine compound of the formula (I), a mixture of different N-acylsarcosine compounds of the formula (I) or a salt thereof is added to the water used for operating the water-steam system in such an amount that the average total concentration of the one or more compounds of formula (I) in the water contained in the water-steam system is in the range from 0.01 to 10 mg/kg;

where the pressure in the water system during the operation is at least 1MPa (10 bar); where however in the case that the water-steam system is a geothermal system, the pressure is from 0.2 to 6MPa (2 to 60 bar).

The invention relates moreover to the use of an N-acylsarcosine compound or a mixture of N-acylsarcosine compounds of the formula (I) or a salt thereof as defined above and below for providing corrosion protection to a pressurized water-steam system where the pressure in the water system during the operation is at least 1MPa (10 bar), where however in the case that the water-steam system is a geothermal system, the pressure is from 0.2 to 6MPa (2 to 60 bar);

where the use comprises the addition of the N-acylsarcosine compound or a mixture of different N-acylsarcosine compounds of the formula (I) or a salt thereof to the water used for operating the water-steam system in such an amount that the average total concentration of the compound of formula (I) in the water contained in the water-steam system is in the range of from 0.01 to 10 mg/kg, preferably in the range of from 0.01 to 8 mg/kg, more preferably in the range of from 0.02 to 6 mg/kg, in particular in the range of from 0.02 to 5 mg/kg, more particularly in the range of from 0.05 to 5 mg/ kg, even more particularly in the range of from 0.1 to 5 mg/kg, such as from 0.5 to 5 mg/kg; specifically in the range of from 0.1 to 3.5 mg/kg, more specifically in the range of from 0.5 to 3.5 mg/kg, even more specifically in the range of from 0.5 to 3 mg/kg, and very specifically in the range from 0.8 to 2.5 mg/kg.

Another object was to provide a method for determining the concentration of the anti-corrosion agent present in pressurized water-steam systems. Long-time experience with FFAs shows that overtime, a depletion of the concentration of anti-corrosion agents might occur. Monitoring the concentration is thus an important tool for a safe and efficient corrosion control. The control of the effectiveness of the treatment is generally done by measurement of residual anti-corrosion agent in the water phase of the water-steam cycle system, which is taken as an indirect proof of the complete protection of the surfaces.

Conceivable methods for this purpose are for example titration, voltamperometry, spectrophotometry, sensor-based methods, flow-injection methods or chromatography. While chromatographic methods are very sensitive and precise, they are too complicated and expensive for most purposes. Spectrophotometric methods are a good compromise. Spectrophotometric methods used for determining the concentration of substances which do not absorb in the emission spectrum of the photometer generally use complex formation of the to-be-tested substances with compounds showing high absorption in the desired range. For instance, B. Wyrwas et al. describe in J. Surfact. Deterg. 2014, 17, 191-198 the determination of anionic surfactants, such as dodecylbenzene sulfonate, in river water. To this purpose, dodecylbenzene sulfonate-containing water is mixed with methylene blue and the formed complex is extracted into a chloroform phase, which is then examined spectrophotometrically. Chloroform is however categorized as a hazardous substance, to be more precise as toxic when inhaled and as suspected to cause cancer and genetic defects. It was therefore an object of the present invention to provide a method which allows the determination of N-acylsarcosine compounds of the formula (I) without requiring the use of hazardous solvents.

A further aspect of the invention relates thus to a method for determining the concentration of a compound of the formula (I), be it in its acid or its salt form, in an aqueous solution or emulsion of the compound of the formula (I) (or of its salt), which comprises the following steps:

i) addition of a cationic phenothiazine dye to a defined amount of the aqueous solution or emulsion containing the compound of the formula (I) or a salt thereof;

ii) subjecting the mixture of step i) to an extraction with a liquid extractant, which comprises at least 95 % by weight of the total amount of the extractant of a $C_8$-$C_{10}$ alkanol, in particular 1-nonanol;

iii) separating the liquid extractant from the aqueous phase and

iv) determining photometrically the concentration of the phenothiazine dye in the extractant.

**Brief Description of Drawings**

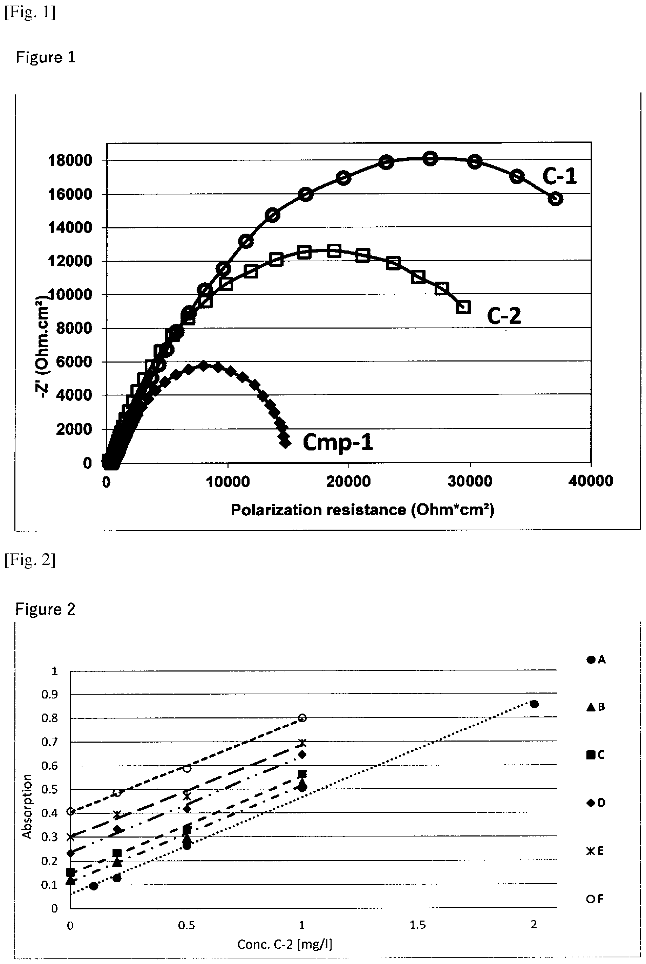

[Fig.1]Figure 1 shows a Nyquist plot of an electrochemical impedance measurement of a mild steel electrode in deionised water, containing 50 ppm of oleyl sarcosine (C-1) or of cocoyl sarcosine (C-2); or containing 44.7 ppm of oleyl amine (Cmp-1) (measured with Bengal rose method) at pH 9.0 at the $5^{th}$ measurement point of t = 100 min carried out according to example 2.

[Fig.2]Figure 2 shows the calibration curve for the determination of the concentration of cocoyl sarcosine (compound C-2) in the absence of chloride ions established by photometric absorption measurements of the complex formed by methylene blue with five defined concentrations of C-2 according to example 9. The absorptions obtained with the five concentrations of C-2 are plotted against the concentration [mg/l] of C-2 and connected by regression line A. Figure 2 further shows the calibration curves for the determination of five or six defined concentration of C-2 in the presence of various, defined amounts of chloride according to example 10. The absorptions obtained with the five concentrations of C-2 are plotted against the respective concentrations [mg/l] of C-2 and connected by regression lines B to F, where B is the regression line for $conc._{C1-}$ = 31 mg/l; C is the regression line for $conc._{C1-}$ = 62 mg/l; D is the regression line for $conc._{C1-}$= 156 mg/l; E is the regression line for $conc._{C1-}$ = 218 mg/l; and F is the regression line for $conc._{Cl-}$ = 311 mg/l.

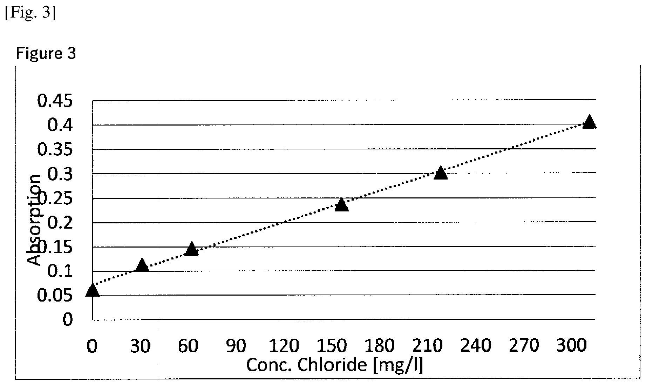

[Fig.3]Figure 3 is a graph in which the absorption values of lines A to F in figure 2 at $conc._{C-2}$ = 0 mg/l are plotted against the absorption on the y-axis (vertical axis); and a regression line was drawn.

**Detailed description of the invention**

Definitions

Unless specified otherwise, the below definitions relate both to the methods and the use of the invention.

The method for providing corrosion protection is generally termed in the following simply as "method (of the invention)", where the method for determining the concentration of the compound of the formula (I) is generally termed as "determination method (of the invention)".

If a mixture of different N-acylsarcosine compounds of the formula (I) or salts thereof is used, it is a matter of course that the concentration range of 0.01 to 10 mg/kg (as well as the preferred ranges specified above, below and in the claims) relates to the overall amount of compounds (I) and not to the single compounds (I) contained in the mixture.

For the concentration range, the weight of the compounds (I) relates to their acid form.

"Average total concentration" is understood as a time average of the concentration. Further details are given below.

Linear or branched acyclic hydrocarbon groups having 10 to 24 carbon atoms in terms of the present invention are linear or branched aliphatic groups having 10 to 24 carbon atoms. The aliphatic groups can be saturated alkyl groups or unsaturated alkenyl or alkynyl groups. Generally, the unsaturated aliphatic groups are alkenyl groups. Linear or branched acyclic hydrocarbon groups having 10 to 24 carbon atoms are thus in general $C_{10}$-$C_{24}$-alkyl or $C_{10}$-$C_{24}$-alkenyl.

$C_1$-$C_6$-Alkyl is a saturated linear or branched aliphatic hydrocarbon radical having 1 to 6 carbon atoms. Examples for $C_1$-$C_6$-alkyl are methyl, ethyl, propyl, isopropyl, n-butyl, 1-methylpropyl (sec-butyl), 2-methylpropyl (isobutyl), 1,1-dimethylethyl (tert-butyl), pentyl, 1-methylbutyl, 2-methylbutyl, 3-methylbutyl, 2,2-dimethylpropyl, 1-ethylpropyl, 1,1-dimethylpropyl, 1,2-dimethylpropyl, hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dime-thylbutyl, 3,3-dimethylbutyl, 1-ethylbutyl, 2-ethylbutyl, 1,1,2-trimethylpropyl, 1,2,2-tri-methylpropyl, 1-ethyl-1-methylpropyl, or 1-ethyl-2-methylpropyl.

$C_{10}$-$C_{11}$-Alkyl is a saturated linear or branched aliphatic hydrocarbon radical having 10 or 11 carbon atoms. Examples for $C_{10}$-$C_{11}$-alkyl are n-decyl, n-undecyl and position isomers thereof, e.g. 2-propylheptyl and the like. $C_{12}$-$C_{18}$-Alkyl is a saturated linear or branched aliphatic hydrocarbon radical having 12 to 18 carbon atoms. Examples for $C_{12}$-$C_{18}$-alkyl are n-dodecyl, n-tridecyl, n tetradecyl, n hexadecyl, n-heptadecyl, n octadecyl and position isomers thereof. $C_{12}$-$C_{20}$-Alkyl is a saturated linear or branched aliphatic hydrocarbon radical having 12 to 20 carbon atoms. Examples for $C_{12}$-$C_{20}$-alkyl are n-dodecyl, n-tridecyl, n tetradecyl, n hexadecyl, n-heptadecyl, n octadecyl, n-nonadecyl, n-eicosyl and position isomers thereof. $C_{10}$-$C_{24}$-Alkyl is a saturated linear or branched aliphatic hydrocarbon radical having 10 to 24 carbon atoms. Examples for $C_{10}$-$C_{24}$-alkyl are n-decyl, n-undecyl, n-dodecyl, n-tridecyl, n tetradecyl, n hexadecyl, n-heptadecyl, n octadecyl, n-nonadecyl, n-eicosyl, n-henicosyl, n-docosyl and position isomers thereof.

Strictly speaking, the term "alkenyl" indicates monounsaturated (i.e. containing one C-C double bond) straight-chain or branched aliphatic hydrocarbon radicals, where the C-C double bond can be in any position. As used in the present invention, the term encompasses however also "alkapolyenyl" groups, i.e. straight-chain or branched aliphatic hydrocarbon radicals having two or more conjugated or isolated, but non-cumulated C-C double bonds.

$C_{10}$-$C_{11}$-Alkenyl is a straight-chain or branched aliphatic hydrocarbon radical having 10 or 11 carbon atoms and one or more, preferably 1, 2 or 3, conjugated or isolated, but non-cumulated C-C double bonds. Examples for $C_{10}$-$C_{11}$-alkenyl in the strict sense (only 1 C-C double bond) are 1-decenyl, 2-decenyl, 3-decenyl, 4-decenyl, 5-decenyl, 1-undecenyl, 2-undecenyl, 3-undecenyl, 4-undecenyl, 5-undecenyl and the positional isomers thereof. Examples for $C_{10}$-$C_{11}$-alkapolyenyl groups (i.e. "alkenyl" with 2 or more, preferably 2 or 3 C-C double bonds) are n-deca-1,3-dienyl, n-deca-1,4-dienyl, n-deca-1,5-dienyl, n-deca-1,6-dienyl, n-deca-1,7-dienyl, n-deca-1,8-dienyl, n-deca-1,9-dienyl, n-deca-2,4-dienyl, n-deca-2,5-dienyl, n-deca-2,6-dienyl, n-deca-2,7-dienyl, n-deca-2,8-dienyl, n-deca-2,9-dienyl, n-deca-3,5-dienyl, n-deca-3,6-dienyl, n-deca-3,7-dienyl, n-deca-3,8-dienyl, n-deca-3,9-dienyl, n-deca-4,6-dienyl, n-deca-4,7-dienyl, n-deca-4,8-dienyl, n-deca-4,9-dienyl, n-deca-5,7-dienyl, n-deca-5,8-dienyl, n-deca-5,9-dienyl, n-deca-6,8-dienyl, n-deca-6,9-dienyl, n-deca-7,9-dienyl, n-undeca-1,3-dienyl, n-undeca-1,4-dienyl, n-undeca-1,5-dienyl, n-undeca-1,6-dienyl, n-undeca-1,7-dienyl, n-undeca-1,8-dienyl, n-undeca-1,9-dienyl, n-undeca-1,10-dienyl, n-undeca-2,4-dienyl, n-undeca-2,5-dienyl, n-undeca-2,6-dienyl, n-undeca-2,7-dienyl, n-undeca-2,8-dienyl, n-undeca-2,9-dienyl, n-undeca-2,10-dienyl, n-undeca-3,5-dienyl, n-undeca-3,6-dienyl, n-undeca-3,7-dienyl, n-undeca-3,8-dienyl, n-undeca-3,9-dienyl, n-undeca-3,10-dienyl, n-undeca-4,6-dienyl, n-undeca-4,7-dienyl, n-undeca-4,8-dienyl, n-undeca-4,9-dienyl, n-undeca-4,10-dienyl, n-undeca-5,7-dienyl, n-undeca-5,8-dienyl, n-undeca-5,9-dienyl, n-undeca-5,10-dienyl, n-undeca-6,8-dienyl, n-undeca-6,9-dienyl, n-undeca-6,10-dienyl, n-undeca-7,9-dienyl, n-undeca-7,10-dienyl, n-undeca-8,10-dienyl, n-deca-1,3,5-trienyl, n-deca-1,3,6-trienyl, n-deca-1,3,7-trienyl, n-deca-1,3,8-trienyl, n-deca-1,3,9-trienyl, n-deca-1,4,6-trienyl, n-deca-1,4,7-trienyl, n-deca-1,4,8-trienyl, n-deca-1,4,9-trienyl, n-deca-1,5,7-trienyl, n-deca-1,5,8-trienyl, n-deca-1,5,9-trienyl, n-deca-1,6,8-trienyl, n-deca-1,6,9-trienyl, n-deca-1,7,9-trienyl, n-deca-2,4,6-trienyl, n-deca-2,4,7-trienyl, n-deca-2,4,8-trienyl, n-deca-2,4,9-trienyl, n-deca-2,5,7-trienyl, n-deca-2,5,8-trienyl, n-deca-2,5,9-trienyl, n-deca-2,6,8-trienyl, n-deca-2,6,9-trienyl, n-deca-2,7,9-trienyl, n-deca-3,5,7-trienyl, n-deca-3,5,8-trienyl, n-deca-3,5,9-trienyl, n-deca-3,6,8-trienyl, n-deca-3,6,9-trienyl, n-deca-3,7,9-trienyl, n-deca-4,6,8-trienyl, n-deca-4,6,9-trienyl, n-deca-4,7,9-trienyl, n-deca-5,7,9-trienyl, n-undeca-1,3,5-trienyl, n-undeca-1,3,6-trienyl, n-undeca-1,3,7-trienyl, n-undeca-1,3,8-trienyl, n-undeca-1,3,9-trienyl, n-undeca-1,3,10-trienyl, n-undeca-1,4,6-trienyl, n-undeca-1,4,7-trienyl, n-undeca-1,4,8-trienyl, n-undeca-1,4,9-trienyl, n-undeca-1,4,10-trienyl, n-undeca-1,5,7-trienyl, n-undeca-1,5,8-trienyl, n-undeca-1,5,9-trienyl, n-undeca-1,5,10-trienyl, n-undeca-1,6,8-trienyl, n-undeca-1,6,9-trienyl, n-undeca-1,6,10-trienyl, n-undeca-1,7,9-trienyl, n-undeca-1,7,10-trienyl, n-undeca-1,8,10-trienyl, n-undeca-2,4,6-trienyl, n-undeca-2,4,7-trienyl, n-undeca-2,4,8-trienyl, n-undeca-2,4,9-trienyl, n-undeca-2,4,10-trienyl, n-undeca-2,5,7-trienyl, n-undeca-2,5,8-trienyl, n-undeca-2,5,9-trienyl, n-undeca-2,5,10-trienyl, n-undeca-2,6,8-trienyl, n-undeca-2,6,9-trienyl, n-undeca-2,6,10-trienyl, n-undeca-2,7,9-trienyl, n-undeca-2,7,10-trienyl, n-undeca-2,8,10-trienyl, n-undeca-3,5,7-trienyl, n-undeca-3,5,8-trienyl, n-undeca-3,5,9-trienyl, n-undeca-3,5,10-trienyl, n-undeca-3,6,8-trienyl, n-undeca-3,6,9-trienyl, n-undeca-3,6,10-trienyl, n-undeca-3,7,9-trienyl, n-undeca-3,7,10-trienyl, n-undeca-3,8,10-trienyl, n-undeca-4,6,8-trienyl, n-undeca-4,6,9-trienyl, n-undeca-4,6,10-trienyl, n-undeca-4,7,9-trienyl, n-undeca-4,7,10-trienyl, n-undeca-4,8,10-trienyl, n-undeca-5,7,9-trienyl, n-undeca-5,7,10-trienyl, n-undeca-5,8,10-trienyl, and position isomers thereof.

$C_{12}$-$C_{18}$-Alkenyl is a straight-chain or branched aliphatic hydrocarbon radical having 12 to 18 carbon atoms and one or more, preferably 1, 2 or 3, conjugated or isolated, but non-cumulated C-C double bonds. Examples for $C_{12}$-$C_{18}$-alkenyl in the strict sense (only 1 C-C double bond) are 1-dodecenyl, 2-dodecenyl, 3-dodecenyl, 4-dodecenyl, 5-dodecenyl, 6-dodecenyl, 1-tridecenyl, 2-tridecenyl, 3-tridecenyl, 4-tridecenyl, 5-tridecenyl, 6-tridecenyl, 1-tetradecenyl, 2-tetradecenyl, 3-tetradecenyl, 4-tetradecenyl, 5-tetradecenyl, 6-tetradecenyl, 7-tetradecenyl, 1-pentadecenyl, 2-pentadecenyl, 3-pentadecenyl, 4-pentadecenyl, 5-pentadecenyl, 6-pentadecenyl, 7-pentadecenyl, 1-hexadecenyl, 2-hexadecenyl, 3-hexadecenyl, 4-hexadecenyl, 5-hexadecenyl, 6-hexadecenyl, 7-hexadecenyl, 8-hexadecenyl, 1-heptadecenyl, 2-heptadecenyl, 3-heptadecenyl, 4-heptadecenyl, 5-heptadecenyl, 6-heptadecenyl, 7-heptadecenyl, 8-heptadecenyl, 1-octadecenyl, 2-octadecenyl, 3-octadecenyl, 4-octadecenyl, 5-octadecenyl, 6-octadecenyl, 7-octadecenyl, 8-octadecenyl and the positional isomers thereof. Some select examples for $C_{12}$-$C_{20}$-alkapolyenyl groups (i.e. "alkenyl" with 2 or more, preferably 2 or 3 C-C double bonds) are n-octa-9,12-dienyl, n-octa-9,12,15-trienyl, and the like.

$C_{12}$-$C_{20}$-Alkenyl is a straight-chain or branched aliphatic hydrocarbon radical having 12 to 20 carbon atoms and one or more, preferably 1, 2 or 3, conjugated or isolated, but non-cumulated C-C double bonds. Examples for $C_{12}$-$C_{20}$-alkenyl in the strict sense (only 1 C-C double bond) are, in addition to those listed for $C_{12}$-$C_{18}$-alkenyl, 9-octadecenyl, 1-nonadecenyl, 2-nonadecenyl, 3-nonadecenyl, 4-nonadecenyl, 5-nonadecenyl, 6-nonadecenyl, 7-nonadecenyl, 8-nonadecenyl, 9-nonadecenyl, 1-eicosadecenyl, 2-eicosadecenyl, 3-eicosadecenyl, 4-eicosadecenyl, 5-eicosadecenyl, 6-eicosadecenyl, 7-eicosadecenyl, 8-eicosadecenyl, 9-eicosadecenyl and the positional isomers thereof. Some select examples for $C_{12}$-$C_{20}$-alkapolyenyl groups (i.e. "alkenyl" with 2 or more, preferably 2 or 3 C-C double bonds) are n-octa-9,12-dienyl, n-octa-9,12,15-trienyl, and the like.

$C_{10}$-$C_{24}$-Alkenyl is a straight-chain or branched aliphatic hydrocarbon radical having 10 to 24 carbon atoms and one or more, preferably 1, 2 or 3, conjugated or isolated, but non-cumulated C-C double bonds. Examples for $C_{10}$-$C_{24}$-alkenyl are those listed above for $C_{10}$-$C_{11}$-alkenyl and $C_{12}$-$C_{20}$-alkenyl, and additionally also tricosyl, tetracosyl and position isomers thereof.

The C-C double bonds in the alkenyl groups can be cis or trans-substituted. Where the alkenyl radicals are derived from natural fatty acids, the C-C double bonds are generally cis.

$C_1$-$C_6$-Hydroxyalkyl is a $C_1$-$C_6$-alkyl group, as defined above, where one hydrogen atom is replaced by a hydroxyl group. Examples for $C_1$-$C_6$-hydroxyalkyl are hydroxymethyl, 1-hydroxyethyl, 2-hydroxyethyl, 1-hydroxyprop-1-yl, 1-hydroxyprop-2-yl, 2-hydroxyprop-1-yl, 2-hydroxyprop-2-yl, 3-hydroxyprop-1-yl, 1-hydroxybut-1-yl, 1-hydroxybut-2-yl, 1-hydroxybut-3-yl, 2-hydroxybut-1-yl, 2-hydroxybut-2-yl, 2-hydroxybut-3-yl, 3-hydroxybut-1-yl, 4-hydroxybut-1-yl, 1-hydroxy-2-methyl-propy-1-yl, 2-hydroxy-2-methyl-propy-1-yl, 3-hydroxy-2-methyl-propy-1-yl aor 2-(hydroxymethyl)-2-methyl-eth-1-yl.

$C_1$-$C_6$-Alkoxy is a $C_1$-$C_6$-alkyl group, as defined above, attached via an oxygen atom. Examples for $C_1$-$C_6$-alkoxy are methoxy, ethoxy, n-propoxy, 1-methylethoxy (isopropoxy), butoxy, 1-methylpropoxy (sec-butoxy), 2-methylpropoxy (isobutoxy), 1,1-dimethylethoxy (tert-butoxy), pentoxy, 1-methylbutoxy, 2-methylbutoxy, 3-methylbutoxy, 1,1-dimethylpropoxy, 1,2-dimethylpropoxy, 2,2-dimethylpropoxy, 1-ethylpropoxy, hexoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy or 1-ethyl-2-methylpropoxy.

$C_8$-$C_{10}$-Alkanol is a linear or branched $C_8$-$C_{10}$-alkyl group, as defined above, substituted by a hydroxyl group in any position. Examples are n-octanol, n-nonanol, n-decanol, 2-ethylhexanol, neononanol, 2-propylheptanol, neodecanol and other position isomers thereof.

If a mixture of different compounds I is used, the compounds differ generally in their definition of R.

Unless specified otherwise, where the amounts or concentrations of components are given as "ppm", this corresponds to 1 g of component per 1,000,000 g of reference substance (or 1 mg/kg). If the unit "ppm" is used to define the concentration of a component in water, given the density of water as close to 1 g/l, 1 ppm can also be understood as 1 g of the component per 1 $m^3$ of water (or 1 mg/l).

Embodiments of the invention

Unless specified otherwise, the below description of general and preferred embodiments of the invention relate both to the method and the use of the invention.

In a particular embodiment, in the method and use of the invention no polymaleic acid or salt thereof (e.g. as contained in the formulations of JP S57-185988) is added to the water to be used or present in the pressurized water-steam system.

In a particular embodiment, in the method and use of the invention no reaction product of a sulfochloride of an aromatic, alkylaromatic, aliphatic or cycloaliphatic hydrocarbon with 12-24 carbon atoms and ammonia or a primary aliphatic amine followed by the reaction of the resulting sulfamide with a halogen carboxylic acid with 2-9 carbon atoms and no reaction product of a sulfochloride with an aminocarboxylic acid with 2-9 carbon atoms in the presence of a base and no salt of these reaction products (component A) of DE 1916628) is added to the water to be used or present in the pressurized water-steam system.

In a particular embodiment, in the method and use of the invention no polymaleic acid or salt thereof and no reaction product of a sulfochloride of an aromatic, alkylaromatic, aliphatic or cycloaliphatic hydrocarbon with 12-24 carbon atoms and ammonia or a primary aliphatic amine followed by the reaction of the resulting sulfamide with a halogen carboxylic acid with 2-9 carbon atoms and no reaction product of a sulfochloride with an aminocarboxylic acid with 2-9 carbon atoms in the presence of a base and no salts of these reaction products (component A) of DE 1916628) is added to the water to be used or present in the pressurized water-steam system.

In another particular embodiment, in the method and use of the invention no N,N'-disubstituted aminomethyl triazole derivative of the following formula:

$$T\text{-}CH_2\text{-}NR_2$$

in which T is an optionally substituted 1,2,3-benzothiazole group or an optionally substituted 1,2,4-triazole group and R is a hydroxyalkyl group (component b) of EP 1092788 A2) is added to the water to be used or present in the pressurized water-steam system.

In a very particular embodiment, none of the above-mentioned polymaleic acids or salts thereof and none of the above-mentioned reaction products of a sulfochloride of an aromatic, alkylaromatic, aliphatic or cycloaliphatic hydrocarbon with 12-24 carbon atoms and ammonia or a primary aliphatic amine followed by the reaction of the resulting sulfamide with a halogen carboxylic acid with 2-9 carbon atoms and none of the above-mentioned reaction products of a sulfochloride with an aminocarboxylic acid with 2-9 carbon atoms in the presence of a base; or salts of these reaction products; and none of the above-mentioned triazole derivatives is added to the water to be used or present in the pressurized water-steam system.

N-acylsarcosine compounds (I)

If a mixture of different compounds I is used, the compounds differ in their definition of R. Such mixtures may be obtained by mixing different N-acylsarcosines (I) or by subjecting mixtures of different carboxylic acids R-C(=O)OH to an amidation reaction with sarcosine or by subjecting mixtures of different carboxylic acids R-C(=O)OH to an amidation reaction with methylamine and then reacting the resulting amide with formaldehyde. Mixtures of different carboxylic acids can be obtained by mixing different carboxylic acids, but are more conveniently obtained from the hydrolysis of natural oils or fats. Natural oils and fats are generally a mixture of different triglycerides, where the single triglyceride molecules may be derived from different fatty acids. Hydrolysis of such natural triglycerides and subsequent amidation of the obtained fatty acid mixture with sarcosine results of course in mixtures of compounds I with different radicals R.

Examples for natural oils (vegetable oils) from which mixtures of different compounds (I) may be derived are sunflower oil, rapeseed oil, soybean oil, coconut oil, palm oil, palm kernel oil, maize oil (corn oil), olive oil, peanut oil, cottonseed oil, linseed oil, sesame oil, safflower oil and the like. An examples for a natural fat from which mixtures of different compounds (I) may be derived is tallow fat.

R in formula (I) is preferably selected from the group consisting of $C_{12}$-$C_{20}$-alkyl and $C_{12}$-$C_{20}$-alkenyl having 1, 2 or 3 C=C double bonds; where in case that a mixture of different N-acylsarcosine compounds of the formula (I) is used, in up to 25% by weight of the N-acylsarcosine compounds (I), based on the total weight of the mixture, R may also be $C_5$-$C_9$ alkyl; and in up to 55% by weight of the N-acylsarcosine compounds (I), based on the total weight of the mixture, R may also be selected from the group consisting of $C_{10}$-$C_{11}$-alkyl and $C_{10}$-$C_{11}$-alkenyl having 1 C=C double bond.

Preferably, R in formula (I) on average has 12 to 18 carbon atoms.

In a particular embodiment, a single compound I (i.e. not a mixture of compounds I) is used, and in this compound R is preferably $C_{12}$-$C_{18}$-alkyl or $C_{12}$-$C_{18}$-alkenyl having 1 C=C double bond; where R is more preferably $C_{14}$-$C_{18}$-alkenyl having 1 C=C double bond and is in particular $C_{16}$-$C_{18}$-alkenyl having 1 C=C double bond. In a specific embodiment, R is derived from oleic acid ((9Z)-octadecenoic acid); i.e. R is (8Z)-heptadecenyl.

In another particular embodiment, a mixture of different compounds I, wherein R has different meanings, is used. In this mixture, R is preferably selected from the group consisting of $C_{12}$-$C_{20}$-alkyl and $C_{12}$-$C_{20}$-alkenyl having 1, 2 or 3 C=C double bonds; where in up to 25% by weight of the N-acylsarcosine compounds (I), based on the total weight of the mixture, R may also be $C_5$-$C_9$ alkyl; and in up to 55% by weight of the N-acylsarcosine compounds (I), based on the total weight of the mixture, R may also be selected from the group consisting of $C_{10}$-$C_{11}$-alkyl and $C_{10}$-$C_{11}$-alkenyl having 1 C=C double bond. In other words, in such a mixture, in at least 20% by weight of the compounds I present in the mixture, based on the total weight of the mixture, R is preferably selected from the group consisting of $C_{12}$-$C_{20}$-alkyl and $C_{12}$-$C_{20}$-alkenyl having 1, 2 or 3 C=C double bonds.

Preferably, if a mixture of different compounds (I) is used, the group R-C(=O) in the acyl sarcosine (I) is derived from natural oils or fats, in particular from vegetable oils. Examples for suitable vegetable oils are sunflower oil, rapeseed oil, soybean oil, coconut oil, palm oil, palm kernel oil, maize oil (corn oil), olive oil, peanut oil, cottonseed oil, linseed oil, sesame oil and safflower oil. Among these, preference is given to sunflower oil, rapeseed oil, soybean oil, coconut oil, palm oil, palm kernel oil, maize oil (corn oil) and olive oil. A specific example is coconut oil. Thus, a specific example for a mixture of different compounds I is a mixture (formally) obtainable by hydrolysis of coconut oil and subsequent amidation of the fatty acids obtained from hydrolysis with sarcosine.

Among the use of single compounds (I) and mixtures of different compounds (I), preference is given to the use of mixtures of different compounds (I). Among the mixtures of different compounds (I), preference is given to mixtures derived from vegetable oils, such as sunflower oil, rapeseed oil, soybean oil, coconut oil, palm oil, palm kernel oil, maize oil (corn oil), olive oil, peanut oil, cottonseed oil, linseed oil, sesame oil or safflower oil, preferably from sunflower oil, rapeseed oil, soybean oil, coconut oil, palm oil, palm kernel oil, maize oil (corn oil) or olive oil, and especially from coconut oil, to be more precise from mixtures obtainable by hydrolysis of vegetable oils, such as sunflower oil, rapeseed oil, soybean oil, coconut oil, palm oil, palm kernel oil, maize oil (corn oil), olive oil, peanut oil, cottonseed oil, linseed oil, sesame oil or safflower oil, preferably of sunflower oil, rapeseed oil, soybean oil, coconut oil, palm oil, palm kernel oil, maize oil (corn oil) or olive oil, and specifically of coconut oil, and subsequent amidation of the fatty acids obtained from hydrolysis with sarcosine.

N-Acylsarcosine compounds (I) are known and commercially available. They can be obtained by methods known in the art, such as amidation of a carboxylic acid R-C(=O)OH or a more reactive derivative thereof, such a halide, in particular a chloride or an anhydride or an ester thereof with sarcosine or a salt thereof. Another approach is the reaction of an amide R-C(=O)-NHCH$_3$ with formaldehyde to R-C(=O)-N(CH$_3$)-CH$_2$OH and subsequent carbonylation with CO using a suitable carbonylation catalyst.

The N-acylsarcosine compound of the formula (I), a mixture of different N-acylsarcosine compounds of the formula (I) or a salt thereof is added to the water used for operating the water-steam system in such an amount that the average total concentration of the compound of formula (I) in the water contained in the water-steam system is in the range from 0.01 to 10 mg/kg, i.e. in the range of 0.01 to 10 mg of all compounds (I) (calculated as the acid form) per kg of water contained in the water-steam system. In a preferred embodiment, the N-acylsarcosine compound of the formula (I), a mixture of different N-acylsarcosine compounds of the formula (I) or a salt thereof is added to the water used for operating the water-steam system in such an amount that the average total concentration of the compound of formula (I) in the water contained in the water-steam system is in the range from 0.01 to 8 mg/kg, more preferably in the range from 0.02 to 6 mg/kg, in particular in the range from 0.02 to 5 mg/kg, more particularly in the range from 0.05 to 5 mg/kg, even more particularly in the range from 0.1 to 5 mg/kg, such as in the range from 0.5 to 5 mg/kg; specifically in the range from 0.1 to 3.5 mg/kg, more specifically in the range from 0.5 to 3.5 mg/kg, even more specifically in the range from 0.5 to 3 mg/kg, and very specifically in the range from 0.8 to 2.5 mg/kg.

In this context, the term "average total concentration" is understood as a time average of the concentration, which means that during the operation time of the water-steam system the overall concentration of all N-acylsarcosine compounds of the formula (I) or their salts in the water used for operating the water-steam system is on average within the above ranges. In fact, the concentration of the N-acylsarcosine compounds of the formula (I) or their salts in the water is not necessarily in the above range at every point of time when the water-steam system is operated. Rather, it is possible that the concentration may be outside the above ranges for a certain period of time. However, any period where the concentration of the N-acylsarcosine compounds of the formula (I) or their salts is outside the above ranges will usually not exceed 4 h, in particular 2 h. Moreover, during these periods the concentration will usually not exceed 2 times of the upper limit given above and it will not or only shortly, preferably for not more than 4 h, drop to zero.

The concentration ranges given above refer to the concentration of the N-acylsarcosine compounds of the formula (I) or their salts in those parts of the water-steam system where the water used for operating the water-steam system is in the liquid state. A skilled person will also understand that the concentration of the N-acylsarcosine compounds of the formula (I) or their salts in the water used for operating the water-steam system may vary within the water-steam system to a certain extent and not be the same at each and every point of the water-steam system. However, the deviation will not be very high and generally the average concentration ranges given above are maintained in any part of the water-steam system where the water is in the liquid state.

In order to monitor the concentration of the N-acylsarcosine compounds of the formula (I) or their salts and to keep it in the above ranges, the concentration of the N-acylsarcosine compounds of the formula (I) or their salts is usually determined periodically or continuously in at least one point of the water-steam system, in particular in at least two points of the water-steam system. For instance, if the water-steam system is a water-steam circuit, reference is made to point 8.2 of the IAPWS Technical Guidance Document 8 16(2016) and the references cited therein. Suitable points for determining the concentration of the N-acylsarcosine compounds of the formula (I) or their salts are in particular those where the water is in the liquid state. Preferred points for controlling the concentration of the N-acylsarcosine compounds of the formula (I) or their salts include e.g.

- the feed water, i.e. the water which is fed from the feed tank to the water-steam circuit;
- the condensate water and
- the water of the steam drum, i.e. the water contained in the steam generating part of the boiler.

For monitoring the actual concentration of the N-acylsarcosine compounds of the formula (I) or their salts, usually a sample is taken and the concentration of the N-acylsarcosine compounds of the formula (I) or their salts in the sample is determined by a standard method for determining the concentration of anionic surfactants, such as the methods described, for example, by S. Chitikela et al. in Analyst, July 1995, 120, 2001-2004 or by B. Wyrwas et al., J. Surfact. Deterg. 2014, 17, 191-198 or by the references cited therein. Preferably, however, determination of the concentration of the N-acylsarcosine compounds of the formula (I) or their salts is carried out by the new determination method of the present invention which is described below in more detail. Of course, it is also possible to determine the concentration of the N-acylsarcosine compounds of the formula (I) or their salts by inline measurements, e.g. by passing a portion of the water used for operating the water-steam system through a bypass having a flow-through sensor or flow-through measuring cell e.g. by the method of B. Wyrwas et al., J. Surfact. Deterg. 2014, 17, 191-198 or in analogy to the method of M. Lendi et al. Power Plant Chemistry 2015, 17(1), pp. 8-13. In this regard, further reference is made to point 8.4 of the IAPWS Technical Guidance Document 8 16(2016) and the references cited therein.

Alternatively, the concentration of the N-acylsarcosine compounds of the formula (I) or their salts can be calculated from the added amount and the total water content of the system. This is a very practical method for systems into which the N-acylsarcosine compounds of the formula (I) or their salts are added just once, but also for systems in which the N-acylsarcosine compounds of the formula (I) or their salts are added periodically or continuously to compensate the losses inherent to the system such calculations are possible when the lost amount can be determined, calculated or estimated.

In order to keep the concentration of the N-acylsarcosine compounds of the formula (I) or their salts in the above ranges, any N-acylsarcosine compound (I) or salt thereof which is consumed will be replenished in such amounts that the compound (I) is present in the concentration ranges given above. For this, the N-acylsarcosine compound of the formula (I) or its salt is dosed to the water used for operating the water-steam system in such an amount that at least during operation of the water-steam system the above concentrations are achieved.

To maintain a proper concentration of the N-acylsarcosine compounds of the formula (I) or their salts in the water used for operating the water-steam circuit the compounds may be added in portions or continuously. The amount or rate of addition will of course depend from the concentration of the N-acylsarcosine compounds of the formula (I) or their salts determined in the control measurements. In case the water-steam system was previously operated without an N-acylsarcosine compound of the formula (I) or a salt thereof, it is preferred that the amount of the N-acylsarcosine compound of the formula (I) or its salt which is initially added will result only in a low concentration which is close to the lower limit given above and that further additions will be made in order to achieve a preferred concentration range. In particular, an initial overdosage should be avoided.

For this, the N-acylsarcosine compounds of the formula (I) or their salts can principally be added at any point of the water-steam system, in particular at a point where the water is present in liquid form. Suitable points for addition of the N-acylsarcosine compounds are principally the same as for film forming amines or for other anticorrosion additives and are principally known to a skilled person; in case of water-steam circuits for example from A. Bursik et al., Power Plant Chemistry 2015, 17(6), pp. 342-353 and from IAPWS Technical Guidance Document 8 16(2016), point 8.5 and the references cited therein. Suitable points include any point between the feed water tank and the boiler, such as feed water pump inlet of the boiler, the deaerating heater (deaerator), in particular the deaerator outlet, the economizer, in particular the feedpump inlets of the low pressure or high pressure economizer circuits, the condenser and into the pipeline to an air cooled condenser, condensate extraction pump and/or drum. While it may be useful to add at least a portion of the N-acylsarcosine compounds of the formula (I) or their salts into the condensate, in particular at the condensate discharge pump, it is as well possible to add them via the feed water only, e.g. to the feed water tank or the feed water pump inlet of the boiler.

The present inventors have observed that the vapour/water distribution ratio of the compounds (I) is such that volatility is sufficiently high to allow transport into the vapour phase and subsequently also into the condensate, but a sufficient part stays behind and provides protection to that part. In a preferred embodiment, the method and use of the invention serve for providing (also) corrosion protection to those parts of the pressurized water-steam system which are in contact with steam and/or with the condensate. Because of the favourable vapour/water distribution ratio, this protective effect is also achieved when the compounds (I) are introduced into the system via the feed water only.

In one embodiment, the compound of the formula (I) or the mixture thereof is added to the water used for operating the water-steam system in its acid form.

In another embodiment, the compound of the formula (I) or the mixture thereof is added to the water used for operating the water-steam system in salt form. Suitable salts are the salts with alkali metal cations, such as the Li, Na or K salts, and the ammonium ($NH_4^+$) or substituted ammonium salts. Preference is given to ammonium and substituted ammonium salts. Suitable substituted ammonium cations are cations of formula $[NHR^1R^2R^3]^+$, where R', $R^2$ and $R^3$, independently of each other, are selected from the group consisting of hydrogen, $C_1$-$C_6$-alkyl, $C_1$-$C_6$-hydroxyalkyl and $C_1$-$C_6$ - alkoxy, with the proviso that at least one of R', $R^2$ and $R^3$ is not hydrogen; or $R^1$ and $R^2$ form together with N a monocyclic or bicyclic 5- to 10-membered ring which may contain further heteroatoms selected from O and N as ring members and $R^3$ is selected from the group consisting of hydrogen, $C_1$-$C_6$-alkyl, $C_1$-$C_6$-hydroxyalkyl and $C_1$-$C_6$ - alkoxy. Examples for amines from which the substituted ammonium cations are derived (by addition of $H^+$) are dimethylamine, trimethylamine, ethylamine, diethylamine, monoethanolamine (= 2-aminoethanol), diethylhydroxylamine, N,N-dimethyl-2-aminoethanol, N,N-diethyl-2-aminoethanol(=diethylethanolamine;DEAE),2-amino-2-methylpropanol , methoxypropylamine, isopropoxypropylamine,3-methoxypropyleneamine,5-aminopentanol, imethylaminoethyl-propanol, 1,2-diaminoethane and morpholine. Particular amines are monoethanolamine (= 2-aminoethanol), N,N-dimethyl-2-aminoethanol, N,N-diethyl-2-aminoethanol (= diethylethanolamine), methoxypropylamine and 2-amino-2-methylpropanol. A specific amine is N,N-diethyl-2-aminoethanol.

In a specific embodiment, the compound of the formula (I) or the mixture thereof is added to the water used for operating the water-steam system in its acid form.

In another specific embodiment, the compound of the formula (I) or the mixture thereof is added to the water used for operating the water-steam system in form of its salt, in particular of its ammonium or substituted ammonium salt.

In a specific embodiment, the compound of the formula (I), be it used in acid form or in salt form, is added to the water used for operating the water-steam system in the form of an aqueous solution or emulsion of the acid form of the compound of the formula (I) or in the salt thereof, where the salt is preferably an ammonium or substituted ammonium salt. Preferably, the concentration of the compound of the formula (I) in the aqueous solution or emulsion is in the range from 0.5 to 10 % by weight, calculated as the acid form of the compound of formula (I) and based on the total weight of the aqueous solution or emulsion. Preferably, the aqueous solution or emulsion consists to at last 99.9 % of a mixture consisting of the compound of formula (I), water and optionally also ammonia and/or at least one organic amine. Ammonia and/or the at least one organic amine are present if the compound of formula (I) is to be added at least partially in form of an ammonium or substituted ammonium salt.

Pressurized water-steam system

"Pressurized" water-steam system means that the system is operated at pressures higher than ambient pressure. The pressure in the water-steam system during operation is at least 10 bar (1 MPa), in particular at least 20 bar (2 MPa), specifically at least 30 bar (3 MPa). Generally, the pressure is from 10 to 200 bar (1 to 20 MPa), preferably from 20 to 150 bar (2 to 15 MPa) and specifically from 30 to 100 (3 to 10 MPa) bar, e.g. from 30 to 70 bar (3 to 7 MPa) or from 30 to 50 bar (3 to 5 MPa). The pressure in some parts of the water-steam system may however be lower, e.g. in feed water tanks or pre-treatment systems, if present.

Water-steam systems in the sense of the present invention are any systems in which steam is produced and which contain internal surfaces principally prone to corrosion. "Internal surfaces" are surfaces of the water-steam system which get into contact with water or steam passing through or circulating in the water-steam system and are thus principally subjected to conditions which may cause corrosion. Examples for susceptible parts in such systems are boilers (= steam generators), steam lines, more generally pipes connecting different components, condensers, coolers, turbines, turbine blades, feed water tanks, deaerating heaters, economizers, flash tanks, pre-treatment systems, etc. made of or containing ferrous and non-ferrous materials principally prone to corrosion, such as steel, aluminium and alloys thereof or copper and alloys thereof. The system may be or comprise a circuit in which the steam is condensed, circled back and re-evaporated, such as in steam-water circuits (WSC); or may be a non-cyclic system in which the steam is not recycled. The water-steam system may be of industrial dimension, e.g. as part of an industrial plant, e.g. of a power-plant, including fossil power plants, such as coal-fired power plants and gas turbine power plants, of biogas power plants, of nuclear power plants, of geothermal units, of plants comprising heat recovery steam generators (HRSG) or dilution steam generators and the like; or may be of utility size. The water-steam system generally comprises at least a steam generator/boiler, e.g. a drum boiler or a once-through steam generator. Exceptions may be geothermal plants which use steam formed by pressure release of highly pressurized water from a geothermal source.

In a preferred embodiment, the water-steam system is a water-steam circuit. As mentioned above, the water-steam system may be part of a power-plant, including fossil power plants, such as coal-fired power plants and gas turbine power plants, of biogas power plants, of nuclear power plants, of plants comprising heat recovery steam generators (HRSG) or dilution steam generators and the like. The method of the present invention is not only suitable for plants operated in the continuous mode, but is also suitable to fulfil the high demands of water-steam circuits which are part of a power-plant operated in cycling mode. In contrast to continuous mode, cycling mode is understood as discontinuous operation with frequent short-term stand-by periods (off periods). In a power plant cycling mode is understood similarly and means the operation of electric generating units at varying load levels (power demand), including on/off and low load variations, in response to changes in system load (demand) requirements. The method of the invention allows for efficient and economic corrosion protection under these challenging conditions.

Advantageously, the N-acylsarcosines (I) and their salts as used in the present invention are virtually non-toxic. They are therefore suitable to be used in water-steam-systems which are in direct or indirect context with the processing of sensitive goods, such as production, purification, sterilization, including pasteurization, packing or storing of, for example, food (including food additives, beverages and feeding stuff for animals), cosmetics or pharmaceuticals. Accordingly, in a particular embodiment, the method and use of the invention serve for providing corrosion protection to a pressurized water-steam system used for generating steam for the direct or indirect processing of food (including food additives, beverages and feeding stuff for animals), cosmetics or pharmaceuticals.

"Processing" means any step from the production site to the user/consumer of the goods, such as production, purification, sterilization, pasteurization, cleaning, furbishing, packaging, storing and delivery of the goods.

"Direct processing" means that steam comes into direct contact with the goods or components thereof in some step from the production site to the user/consumer. "Indirect processing" means that there is no direct contact of the steam with the goods or components thereof. For instance, steam comes into direct contact with sensitive goods or components thereof in extraction, distillation, drying, sterilization or pasteurization processes during production, purification, furbishing, packaging or storing of such products. Indirect contact means that steam does not come into direct contact with sensitive goods or components thereof, but with other goods, materials or surfaces which come then into contact with said goods or components thereof. Examples are steam contact with packaging material or with surfaces, areas, spaces, apparatuses or materials on, in or with which sensitive goods or components thereof are processed, e.g. produced, purified, sterilized, pasteurized, cleaned, furbished, packed or stored. Direct or indirect steam contact with sensitive goods or components thereof occurs for example in extraction or distillation processes in the production of food, food additives, beverages, feed stuff, cosmetics or pharmaceuticals, in high pressure food preservation, in packaging of food, food additives, beverages, feed stuff, cosmetics or pharmaceuticals, in the cleaning or sterilization of areas, spaces, surfaces, apparatuses or working materials in bakeries, dairy product plants, plants in which sugar is produced or processed, canneries, breweries, butcher shops, production and packaging sites for pharmaceuticals or cosmetics, etc.

Just to illustrate direct contact with food, steam comes for example into direct contact with food during can sealing, mussel cooking, during meat and poultry processing, e.g. plucking (of chicken, ducks, goose, turkeys etc.) or removal of pig bristles and the like; during bleaching, defrosting or cooking.

One example of an indirect contact is a water-steam circuit used in paper machines used for the production for paper suitable for contact with food, feed stuff, cosmetics or pharmaceuticals, e.g. packaging paper. Thus, in a preferred embodiment, the water-steam system is a water-steam circuit used in paper machines, especially in paper machines used for the production for paper suitable for contact with food, feed stuff, cosmetics or pharmaceuticals, e.g. packaging paper. Another example of an indirect contact is steam used in the purification and/or sterilization of packaging materials such as bottles or cans in breweries (e.g. tunnel pasteurizers) or in other beverage industries (for juices, soft drinks, mineral water, syrups etc.) or in canneries.

In an alternative embodiment, the N-acylsarcosine compound or a mixture of different N-acylsarcosine compounds of the formula (I) or a salt thereof is added to the production well, injection well, heat exchangers, steam separators, overground and underground pipeline and the like of a geothermal power plant, such as dry steam power stations, flash steam power stations or binary cycle power stations, or a geothermal heating unit, e.g. geothermal district heating units. It is evident that after the power production/heating cycle it is not desirable to release water containing susceptible components into the environment.

The N-acylsarcosine compound or a mixture of different N-acylsarcosine compounds of the formula (I) or a salt thereof can be used in combination with substances typically used in such facilities, for example phosphonic acids, polymeric additives or chelants. Examples of suitable phosphonic acids are EDTMP [ethylenediamine tetra(methylene phosphonic acid)], ATMP [aminotris(methylenephosphonic acid)], PBTC (phosphonobutanetricarboxylic acid), TDTMP [tetramethylenediaminetetra(methylenephosphonic acid)], HDTMP [hexamethylenediaminetetra(methylenephosphonic acid)], etidronic acid, HEDP (1-hydroxyethylidene-1,1-diphosphonic acid), DMMP (dimethyl methylphosphonate), vinylphosphonic acid, AMP [aminotris(methylenephosphonic acid)], HPAA (2-hydroxyphosphonocarboxylic acid), or CEPA (2-carboxyethyl phosphonic acid). Examples of suitable polymeric additives are acrylic acid homo-, co- and terpolymers, phosphinopolycarboxylic acids, acrylate/acrylamide copolymers, homo-, co- and terpolymers of acrylamides and their salts, polyethylene glycol, co- and terpolymers based on acrylic acid and 2-acrylamido-2-methylpropanesulfonic acid (AMPS), co- and terpolymers based on (meth)acrylic acid and allylether, and the like.

Pressure of such geothermal systems might vary between 2 to 60 bar (0.2 to 6 MPa). Depending on the system, temperatures may vary between 55 to 300°C. pH values are typically in the range of from 4 to 10.

In another embodiment, the N-acylsarcosine compound or a mixture of different N-acylsarcosine compounds of the formula (I) or a salt thereof is added to a dilution steam generator (DSG). Dilution steam generators are low pressure boilers usually used in ethylene plants where they deliver the dilution steam for the cracking process. In most cases the water system is a closed loop which is circulated from the cracking furnace to the oil quench unity followed by the water quench unity, oil/water separator and stripper to DSG and back to the furnace. The challenge of DSG treatment is in many cases the high concentration of $C_1$-$C_4$ carboxylic acids (mainly formic and acetic acid). Major issues are thus corrosion protection of boiler and dilution steam lines.

Just to avoid any doubt, the N-acylsarcosine compounds, their mixtures and salts are of course suitable for use in any pressurized water-steam system. The systems specifically mentioned above (water-steam-systems in direct or indirect context with the processing of sensitive goods, geothermal power plants/heating units and DSGs) just highlight where the advantages of the N-acylsarcosine compounds, their mixtures and salts come particularly into evidence.

Operation conditions

As explained above, the system is operated at pressures higher than ambient pressure. The pressure in the water-steam system during operation is at least 10 bar (1 MPa), in particular at least 20 bar (2 MPa), specifically at least 30 bar (3 MPa). Generally, the pressure is from 2 to 300 bar (0.2 to 30 MPa), preferably from 10 to 200 bar (1 to 20 MPa), more preferably from 20 to 150 bar (2 to 15 MPa) and specifically from 30 to 100 bar (3 to 10 MPa), e.g. from 30 to 70 bar (3 to 7 MPa) or from 30 to 50 bar (3 to 5 MPa). The pressure in some parts of the water-steam system may however be lower, e.g. in feed water tanks or pre-treatment systems, if present.

Preferably, the temperature in the water-steam system during operation is at least 100°C, preferably from 150 to 570°C, in particular from 200 to 400°C and specifically from 200 to 350°C. The temperature in some parts of the water-steam system may however be lower, e.g. in a condenser, feed water tank or pre-treatment system, if present.

During operation of the water-steam system the pH is preferably at least neutral (i.e. at least pH 7, e.g. 7 to 14 or 7 to 12 or 7 to 10). Optimum pH levels depend on the specific water-steam system, the materials contained therein which come into contact with water or steam and the operation mode. As a rule, systems under continuous operation are less susceptible to corrosion because of a too low or too high pH than systems working discontinually (e.g. cycling mode operation) or systems during shutdown. Systems containing components of aluminium or aluminium alloys which come into contact with water or steam are generally operated at lower pH than those of steel; at least in non-continuous operation mode. Geothermal power plants or heating units may however also be operated at a pH of below 7, but preferably the pH is at least 4, more preferably at least 5, in particular at least 6 and more particularly at least 7, e.g. 4 to 10 or 5 to 10 or 6 to 9.5 or 7 to 9. Thus, in sum, the pH in the water-steam system is typically in the range of from 4 to 14, preferably 5 to 12, more preferably 6 to 12, e.g. 7 to 12 or 7 to 11 or 7.5 to 11, or 8.0 to 10 or 8.5 to 10. The pH values refer to values determined at 20°C.

In case the water-steam system is a water-steam circuit, a pH value of the water in the range of preferably pH 7.5 to 12, more preferably in the range of 8.0 to 11, in particular in the range of pH 8.5 to 10, more particularly in the range of pH 8.7 to 10, specifically in the range of pH 9.0 to 10 and very specifically in the range of pH 9.2 to 10, as determined at 20°C, is maintained. This will generally be achieved by the addition of a suitable base. Suitable bases are for example alkali metal hydroxides, sodium hydroxide, potassium hydroxide or lithium hydroxide, phosphates, such as sodium phosphate, ammonia and alkalizing amines. Alkalizing amines are volatile amines, in particular amines $NR^1R^3R^3$, where R', $R^2$ and $R^3$, independently of each other, are selected from the group consisting of hydrogen, $C_1$-$C_6$-alkyl, $C_1$-$C_6$ - hydroxyalkyl and $C_1$-$C_6$-alkoxy, with the proviso that at least one of R', $R^2$ and $R^3$ is not hydrogen; or $R^1$ and $R^2$ form together with N a monocyclic or bicyclic 5- to 10-membered ring which may contain further heteroatoms selected from O and N as ring member and $R^3$ is selected from the group consisting of hydrogen, $C_1$-$C_6$-alkyl, $C_1$ - $C_6$-hydroxyalkyl and $C_1$-$C_6$-alkoxy. Examples for suitable amines $NR^1R^2R^3$ are dimethylamine, trimethylamine, ethyl-amine, diethylamine, monoethanolamine (= 2-aminoethanol), diethylhydroxylamine, N,N-dimethyl-2-aminoethanol, N,N-diethyl-2-aminoethanol (= diethylethanolamine; DEAE), 2-amino-2-methylpropanole, methoxypropylamine, isopropoxypropylamine, 3-methoxypropyleneamine, 5-aminopentanol, dimethylaminoethylpropanol, 1,2-diaminoethane, morpholine and mixtures thereof. Particular amines are monoethanolamine (= 2-aminoethanol), N,N-dimethyl-2-aminoethanol, N,N-diethyl-2-aminoethanol (= diethylethanolamine), methoxypropylamine and 2-amino-2-methylpropanol. A specific amine is N,N-diethyl-2-aminoethanol.

During the operation time of the water-steam circuit the pH value of the water used for operating the water-steam circuit is on average within the above ranges. In fact, the pH value of the water is not necessarily in the above range at every point of time when the water-steam circuit is operated. Rather, it is possible that the pH value may be outside the above ranges for a short period of time. However, any period where the pH level is outside the above ranges will usually not exceed 1 h, in particular 30 min. to avoid an increase of corrosion. Moreover, during these periods the pH level will usually not deviate by more than 0.2 pH units, in particular not more than 0.1 pH units of the limits given above.

A skilled person will also understand that the pH level of the water used for operating the water-steam circuit may vary within the water-steam circuit to a certain extent and not be the same at each and every point of the water-steam circuit. However, the deviation will not be very high and generally the above average pH levels are maintained in any part of the water-steam circuit where the water is in the liquid state.

In order to monitor the pH level of the water used for operating the water-steam circuit and to keep it in the above ranges, the pH level is usually determined periodically or continuously in at least one point of the water-steam-circuit in particular in at least two points of the water-steam-circuit. Suitable points for determining the pH level are in particular those where the water is in the liquid state. Preferred points for controlling the pH level include e.g.

- the feed water, i.e. the water which is fed from the feed tank to the water-steam circuit;
- the condensate water and
- the water of the steam drum, i.e. the water contained in the steam generating part of the boiler.

For monitoring the actual pH level of the water used for operating the water-steam circuit, a sample may be taken and the pH of the sample is determined according a standard procedure as described above, for example according to the procedure described in DIN EN ISO 10253:2012-04 or other methods known in the art. Of course, it is also possible to determine the pH value by inline measurements, e.g. by passing a portion of the water used for operating the water-steam circuit through a bypass having a flow-through measuring cell equipped with a pH meter.

The base used for adjusting or maintaining the desired pH can principally be added at any point of the water-steam circuit, in particular at a point where the water is present in liquid form. Suitable points for addition of the base are those mentioned above for the addition of the N-acylsarcosine or its salt and include e.g. the feed water tank, any point between the feed water tank and the boiler, such as feed water pump inlet of the boiler, the deaerating heater (deaerator), in particular the deaerator outlet, the economizer, in particular the feed pump inlets of the low pressure or high pressure economizer circuits, the condenser and into the pipeline to an air cooled condenser, condensate extraction pump and/or drum.

To maintain a proper pH level of the water used for operating the water-steam circuit the further base may be added in portions or continuously. The amount or rate of addition will of course depend from the outcome of the pH measurements.

In case the water-steam system is a water-steam circuit, it has furthermore been found beneficial to keep the conductivity of the water used for operating the water-steam circuit at a level of at most 30 $\mu$S/cm, in particular at most 20 $\mu$S/cm or at most 10 $\mu$S/cm. The conductivity values given here refer to the specific conductivity of a sample of the water used for operating the water-steam circuit as determined at 22°C. The conductivity can be determined by standard procedures as described e.g. in DIN EN 27888:1993-11. It is apparent for a skilled person that in some cases it may not possible to measure the conductivity at 22°C. However, it is not necessary to measure the conductivity at 22°C because a skilled person is familiar with the temperature dependence of conductivity. Therefore, it is possible to measure conductivity at a temperature different from 22°C and make proper corrections. Modern conductivity meters usually have temperature compensation means. Frequently, the conductivity is measured in samples which have a temperature in the range from 20 to 27°C in order to minimize temperature effects.

During the operation time of the water-steam circuit the conductivity of the water used for operating the water-steam circuit is on average below the above limits. In fact, the conductivity of the water is not necessarily below the above limits at every point of time when the water-steam circuit is operated. Rather, it is possible that the conductivity may be slightly higher than the above limits for a short period of time. However, any period where the conductivity is higher than the above limits will usually not exceed 4 h, in particular 2 h. Moreover, during these periods the conductivity will usually not exceed 50 $\mu$S/cm, in particular not exceed 30 $\mu$S/cm or 20 $\mu$S/cm.

A skilled person will also understand that the conductivity of the water used for operating the water-steam circuit may vary within the water-steam circuit to a certain extent and not be the same at each and every point of the water-steam circuit. However, the deviation will not be very high and generally the above limits of conductivity are maintained in any part of the water-steam circuit where the water is in the liquid state.

In order to monitor the conductivity of the water used for operating the water-steam circuit and to keep it in the above ranges, the conductivity is usually determined periodically or continuously in at least one point of the water-steam-circuit in particular in at least two points of the water-steam-circuit. Suitable points for determining the conductivity of the water used for operating the water-steam circuit are those, where the water is in the liquid state. Preferred points for controlling the pH level include e.g.

- the feed water, i.e. the water which is fed from the feed tank to the water-steam circuit;
- the condensate water and
- the water of the steam drum, i.e. the water contained in the steam generating part of the boiler.

For monitoring the actual conductivity of the water used for operating the water-steam circuit, a sample may be taken and the conductivity of the sample is determined according to a standard procedure, in particular according to the procedure described in DIN EN 27888:1993-11. Of course, it is also possible to determine the conductivity value by inline measurements, e.g. by passing a portion of the water used for operating the water-steam circuit through a bypass having a flow-through measuring cell equipped with a conductivity meter.

In order to keep the conductivity below the above limits, it may be necessary to remove ions causing the conductivity from the water. For this, the water circulating in the water-steam circuit may be conducted through a bed of an ion-exchange resin, in particular a mixed bed of an cation exchange resin and an anion exchange resin to remove any ionic impurities. These units are also termed polishing units. Preferably, the condensate is conducted through the polishing unit.

The N-acylsarcosine compounds (I) are useful for conferring corrosion protection to various metals, especially to ferrous materials and alloys thereof (such as various steel types), but also to non-ferrous metals and alloys, such as copper, copper alloys, aluminium or aluminium alloys.

While steam generators and turbines are frequently made of ferrous materials, generally steel, other components, such as condensers or coolers and pipes, and other water/steam systems may be made of or comprise non-ferrous materials, such as copper, copper alloys, aluminium or aluminium alloys.

The type of steel or non-ferrous metal/alloy will depend from the type of component and the constructional demands thereof. Steels types frequently used for the construction of components of water-steam circuits may be high alloy steels or low-alloy steels and include, but are not limited to, e.g. martensitic steels, in particular martensitic steels having a chromium content of 9 - 14 %, such as the martensitic steels T/P92 and VM12/VM12-SHC, austenitic steels and ferritic steels, e.g. low alloy ferritic steels such as T/P24, but also nickel base alloys.

Typical aluminium materials include in particular pure aluminium having an aluminium content of > 99 % and aluminium alloys such as aluminium-magnesium alloys, aluminium-magnesium-silicon alloys and aluminium-zinc alloys.

Typical copper materials include pure copper and brasses.

In particular, the N-acylsarcosine compounds (I) are useful for conferring corrosion protection to steel, copper and alloys thereof, particularly to steel and copper, and specifically to steel.

In addition to the compounds (I) or salts thereof and the optional bases described above in context with the salts of compounds (I) and with pH adjusting, further additives may be added to the water in the steam-water system. These include polymeric additives as dispersants or anti-scalants, or oxygen scavengers.

Examples for polymeric additives are homo-, co- and terpolymers or higher polymers of (meth)acrylic acid, such as polyacrylic acid, polymethacrylic acid, co- and terpolymers or higher polymers of (meth)acrylic acid and (meth)acrylates, co- and terpolymers or higher polymers of acrylic acid and 2-acrylamido-2-methylpropanesulfonic acid (AMPS), and co- and terpolymers or higher polymers of (meth)acrylic acid and allylether; homo-, co- and terpolymers or higher polymers of (meth)acrylates different from those mentioned above, such as co- and terpolymers or higher polymers of acrylates and acrylamides, homo-, co- and terpolymers or higher polymers of acrylamides different from those mentioned above, phosphinopolycarboxylic acids and polyethylene glycol.

Examples for oxygen scavengers are hydrazine, carbohydrazide, diethylhydroxyl amine, ascorbic acid and salts thereof, sulfites and bisulfites.

The invention relates moreover to a method for determining the concentration of the compound of the formula (I) in an aqueous solution or emulsion of the compound of the formula (I), which comprises the following steps:

i) addition of a cationic phenothiazine dye to a defined amount of the aqueous solution or emulsion containing the compound of the formula (I) or a salt thereof;
ii) subjecting the mixture of step i) to an extraction with a liquid extractant, which comprises at least 95 % by weight of the total amount of the extractant of a $C_8$-$C_{10}$ alkanol, in particular 1-nonanol;
iii) separating the liquid extractant from the aqueous phase and
iv) determining photometrically the concentration of the phenothiazine dye in the extractant.

The determination method is based on the fact that the compounds of the formula (I), when present as salts, form ion associates (complexes) with the (cationic) phenothiazine dyes. These complexes are better soluble in $C_8$-$C_{10}$ alkanols than in water and can therefore be extracted into the organic phase formed by these solvents. The absorption of this complex, to be more precise of the phenothiazine dye part thereof, is then determined photometrically. The absorption is a measure for the concentration of the dye. By serial measurements of absorbance of the complexes formed by defined concentrations of the compounds of the formula (I) and the phenothiazine dyes, calibration curves can be prepared, which than allow the correlation of absorption to the concentration of the phenothiazine dye and ultimately to the concentration of the compound (I).

Compounds (I) are weak acids with a $pK_a$ roughly in the range of 3 to 5 and thus may form buffer systems with their corresponding anion in water. They are predominantly present as salts only far beyond the pH ranges in which they form buffer systems. This is generally the case beyond pH 9. However, given the complex formation with the phenothiazine dye and its extraction into the organic phase, this shifts the acid/salt equilibrium towards the salt even at distinctly lower pH values. Thus, it was observed that a pH of 6 or even lower is sufficient to shift the acid/salt equilibrium in steps i) and ii) to the salt to such an extent as to allow essentially complete extraction of the compounds (I) in form of the phenothiazine dye associate into the organic phase. Therefore, before, during or shortly after step i) is carried out, and in any case before step ii) is carried out, the aqueous solution or emulsion containing the compound of the formula (I) is adjusted to a pH of preferably at least 6 if the solution or emulsion has a pH below this value. More preferably, the aqueous solution or emulsion containing the compound of the formula (I) is adjusted to a pH of at least 6.5 if the solution or emulsion has a pH below this limit. Preferably, pH adjustment is carried out before the phenothiazine dye is added. Preferably, the aqueous solution or emulsion is adjusted to a pH of from 6.5 to 7.5, in particular from 6.9 to 7.1 and specifically to a pH of 7.0, as measured at 20°C.

If the pH of the aqueous solution or emulsion containing the compound of the formula (I) or a salt thereof is in the basic range from the start, it is generally not necessary to make any pH adjustment. For safety or any other reasons, it might nevertheless be desired to carry out the measurement around neutral pH. Thus, in this case, too, the aqueous solution or emulsion may be adjusted to a pH of preferably from 6.5 to 7.5, in particular from 6.9 to 7.1 and specifically to a pH of 7.0, as measured at 20°C.

While the pH adjustment can principally be carried out with any water-miscible base (if the pH of the starting aqueous solution or emulsion is in the acidic range) or water-miscible acid (if the pH of the starting aqueous solution or emulsion is in the basic range), it is preferred to use a buffer. Suitable buffers are all those which have a good buffering capacity around neutral pH, such as phosphate buffer, bicarbonate buffer or phosphate/citric acid buffers. In particular a phosphate buffer is used, e.g. a buffer containing a dihydrogenphosphate and a hydrogenphosphate salt, e.g. potassium dihydrogenphosphate and dipotassium hydrogenphosphate or sodium dihydrogenphosphate and disodium hydrogenphosphate or potassium and sodium dihydrogenphosphate and hydrogenphosphate, such as potassium dihydrogenphosphate and disodium hydrogenphosphate.

The base, the acid or the buffer is usually added in form of an aqueous solution.

Preferably, a buffer is added to the sample to be tested independently of whether or not the pH is in the required range.

Suitable phenothiazine dyes are methylene blue (N,N,N',N'-tetramethylthionie chloride), new methylene blue (3,7-bis(ethylamino)-2,8-dimethylphenothiazin-5-ium chloride) and toluidine blue (N',N',2-trimethylphenothiazine-3,7-diamino chloride). Preferably, methylene blue is used.

Preferably, the phenothiazine dye is used in step i) in such a concentration that its (molar) amount is equal to or exceeds the maximum (molar) amount of compound (I) expected in the water sample (i.e. in the aqueous solution or emulsion containing the compound of the formula (I) or a salt thereof). Preferably, the phenothiazine dye is added in step i) in an amount which exceeds the maximum (molar) amount of compound (I) expected in the water sample. More preferably, the phenothiazine dye is used in a molar excess of at least 1.05, more preferably in a molar excess of at least 1.1 and especially in a molar excess of at least 1.5, relative to 1 mol of compound (I) expected in the water sample. The amount of phenothiazine dye can exceed by far the amount of compound (I) without disturbing the determination method. Out of practical reasons, however, the excess molar amount is generally not higher than 300 or 200 times the molar amount of compound (I) expected in the water sample. In particular, the phenothiazine dye is added in step i) in an amount which is with a (molar) factor of from 1.05 to 200, more particularly with a (molar) factor of from 1.1 to 150 higher than the maximum amount of compound (I) expected in the water sample, specifically with a (molar) factor of from 3 to 100 higher than the maximum amount of compound (I) expected in the water sample. The expected maximum amount of compound (I) in the water sample can be easily calculated or estimated from the amount added to the system and the amount of water present in the system. In cases where the added amount is not known, the approximate amount can be determined by preliminary tests.

The phenothiazine dye is generally added as an aqueous solution.

The final volume of the aqueous solution obtained before step ii) is carried out (containing the compound (I), the phenothiazine dye and, if present, the base or preferably the buffer) is determined or calculated, if predetermined amounts of phenothiazine dye solution and buffer solution have been used.

In step i), the temperature should generally not exceed 70°C. Preferably, the temperature is from 15 to 35°C, in particular from 20 to 25°C.

The extractant of step ii) contains at least 95 % by weight of a $C_8$-$C_{10}$ alkanol, relative to the total weight of the extractant.

Among the $C_8$-$C_{10}$ alkanols suitable as liquid extractants, preference is given to 1-nonanol.

Extraction can be carried out once or several times, e.g. 1, 2 or 3 times, but generally, a single extraction is sufficient. Thus, in a specific embodiment, the aqueous phase is extracted only once with the alkanol.

The $C_9$-$C_{10}$ alkanol is used in such an amount that the volume ratio of water sample to alkanol is preferably of from 3:1 to 1:3, more preferably from 2:1 to 1:2, in particular from 1.5:1 to 1:1.5 and specifically from 1.5:1 to 1.1:1. This amount relates to a single extraction step. In case of multiple extractions, the overall amount of alkanol used for exatraction is generally higher. In this case, it is expedient to concentrate the organic phase obtained after phase separation, e.g. by removal of a part of the alkanol, e.g. distillatively, if desired under reduced pressure.

In any case, the amount of alkanol used is a defined amount.

Extraction is generally effected by intimately contacting the alkanol and the aqueous phase, e.g. by vigorous shaking or mixing for a minimum time, e.g. for at least 5 sec or preferably for at least 10 sec, e.g. for 5 sec to 1 min or preferably for 10 to 40 sec.

Phase separation (step iii) of the organic and aqueous phases can be carried out by usual means, e.g. by a separatory funnel or by removal of a part of the (upper) organic phase with a pipette or a syringe.

In step iii), a defined amount of the organic phase is then subjected to a photometric determination of the concentration of the phenothiazine in the complex formed by the phenothiazine dye and the compound (I). From the concentration thereof the concentration of the compound (I) can then be determined.

The concentration of the phenothiazine can be determined by absorbance measurement in a photometer. Suitable photometers are well known. As a specific example, Spektralphotometer DR3900 from Hach Lange GmbH, Germany may be mentioned.

In a typical photometer a constant standard light source emits light that is passed through a cuvette containing the liquid sample. Depending on the concentration of the light-absorbing substance in the sample, a part of the light is absorbed and the passing light is measured with a photocell. The passing light can be correlated with the concentration of the absorbing substance by comparison with correlation curves or tables prepared beforehand with a series of defined concentrations of said substance determined under defined conditions which correspond strictly to those applied in the examination of samples of unknown concentrations.

The determination of the concentration of the phenothiazine dye in the organic phase is based on the Lambert-Beer law. Absorption (this may alternatively be expressed as extinction) is defined by following equation:

$$A_\lambda = \varepsilon_\lambda \cdot c \cdot d$$

where

$A_\lambda$ is the absorption at a certain wavelength $\lambda$;
$\varepsilon_\lambda$ is the spectral extinction coefficient at that same wavelength $\lambda$;
c is the concentration of the absorbing substance (here the phenothiazine dye), for example in $mol/m^3$; and
d is the optical path length of the cuvette containing the solution of the absorbing substance, for example in m.

The concentration can thus be calculated by solving the equation for c:

$$c = A_\lambda / (\varepsilon_\lambda \cdot d)$$

The extinction coefficient is substance-specific and depends also on the solvent, the pH and the emitted wavelength. It has therefore to be determined for the specific conditions by extinction measurements at defined concentrations of the substance to be tested in a given solvent at a given pH and at a defined path length.

The absorption is determined as the logarithm (with base 10) of the ratio of the intensity of irradiated (emitted) light and transmitted light:

$$A = \log_{10} (I_0/I_t)$$

where

$I_0$ is the intensity of the irradiated light, for example in $W/m^2$; and
$I_t$ is the intensity of the transmitted light, for example in $W/m^2$.

The wavelength $\lambda$ of the emitted light has of course to be in the absorption range of the phenothiazine dye used. Typically, $\lambda$ is in the range of from 550 to 700 nm, preferably from 600 to 680 nm, and in particular from 610 to 660 nm, for example 610 nm or 650 nm or 660 nm. In a specific embodiment, light with a $\lambda$ of 660 nm is used.

The absorption or extinction should generally not exceed 1.6. If an absorption of >1 is observed, it is advisable to dilute the water sample with a defined amount of water before or during or after carrying out step i) and in any case before carrying out step ii).

The sample subjected to the photometric determination in step iii) has a temperature in the range of from 10 to 35°C, preferably from 15 to 30°C and in particular from 20 to 25°C.

In practice, the concentration of the compound (I) is determined by comparing the absorption with absorption calibration curves established by measurements of solutions of compounds (I) of determined concentrations. Since absorption depends not only on the concentration of the tested compounds, but on further factors such as the specific compound used, the dye with which the compound forms a complex, the extractant, the pH of the initial solution, the wavelength of the emitted light, the path length of the light through the sample (and thus the dimension of the cuvette) and the photometer used, the calibration curves have to established under the same conditions as the test to determine the unknown concentration of compounds (I) to obtain reliable results. Calibration curves have to be established for specific compounds (I) or specific mixtures thereof by carrying out measurements of the absorption of the specific compound I (mixture) - dye complex in a range of defined concentrations of the compound I (mixture). If the calibration curve [absorption versus concentration of compound I (mixture)] shows that the dependence of absorption and concentration is linear, the concentration can be determined more easily by mathematic calculations: In case of a linear dependence between absorption and concentration, absorption values (y-axis) can be plotted in a graph against the corresponding concentrations of compounds (I) used for calibration (x-axis), resulting in a (regression) line of slope "a" and an ordinate abscissa (x = 0) "b". b is either determined experimentally (absorption without compounds (I), but with all other components) or by extrapolation of the regression line to x = 0. Absorption can be expressed as product of slope and concentration plus ordinate abscissa:

$$\text{absorption} = a \times \text{conc.(compound I)} + b \quad (1)$$

Solving the equation for the concentration leads to following equation via which the concentration of the tested compound (I) can be calculated by determining absorption (under the same conditions as the calibration):

$$\text{conc. (compound I)} = (\text{absorption} - b) : a \quad (2)$$

It has been found that for compounds (I) the dependence of absorption and concentration is linear at least between 0.1 and 2 mg/l, which is a relevant range for determining the concentration of compounds (I). In case of higher concentrations where the dependence is no longer linear or it is not known whether it is linear, if desired, the sample can be diluted by a defined factor so as to arrive at a concentration where linearity is given. Otherwise, the obtained absorption is correlated to the concentration by simply comparing with the calibration curve.

It has been found that higher concentrations of chloride ions may falsify the determination of the concentration of compounds (I). Therefore, if the sample contains chloride in a concentration which exceeds 30 mg/l, the chloride concentration has to be determined and the absorption results have to be adjusted. Chloride concentration can be determined by usual means, e.g. via titration (e.g. various argentometric titrations) or with commercial test kits, e.g. test strips from Hach Lange GmbH, Germany which allow determination of chloride concentration in a range of 30 to 300 mg/l. For adjusting the absorption results, for instance calibration curves of various defined chloride concentrations are established by carrying out measurements of the absorption of chloride - dye complex in a range of defined concentrations of chloride. If the calibration curve (absorption versus concentration of chloride) shows that the dependence of absorption and concentration is linear, absorption values (y-axis) can be plotted in a graph against the corresponding concentrations of chloride used for calibration (x-axis), resulting in a (regression) line of slope "d" and an ordinate abscissa (x = 0) "b". b is either determined experimentally (absorption without compounds (I), but with all other components) or by extrapolation of the regression line to x = 0. Theoretically, b in this case should be identical with b in equation (1) or 2. Absorption can be expressed as product of slope and concentration plus ordinate abscissa:

$$\text{absorption} = d \times \text{conc.(chloride)} + b \quad (3)$$

Solving the equation for the concentration leads to following equation (4):

$$\text{conc. (chloride)} = (\text{absorption} - b) : d \quad (4)$$

Combining equations (2) and (4) leads to equation (5) which allows determination of the concentration of compound (I) taking into account the disturbance by chloride ions:

$$\text{conc. (compound I)} = (\text{absorption} - d \times \text{conc.(chloride)} - b) : a \quad (5)$$

Outside linearity, calibration curves of different concentrations of compounds (I) in the presence of different concentrations of chloride ions have to be used.

It has moreover been found that higher concentrations of hydrogen carbonate ions may falsify the determination of the concentration of compounds (I). Therefore, if the sample contains hydrogen carbonate in a concentration which exceeds 1.4 mmol/l, the hydrogen carbonate concentration has to be determined and the absorption results have to be adjusted. Hydrogen carbonate concentration can be determined by usual means, e.g. via titration or with commercial test kits, e.g. test strips from Hach Lange GmbH, Germany or Macherey Nagel GmbH & Co. KG, Germany. Given that most test strips are tailored for the determination of calcium carbonate, out of practical reasons, the hydrogen carbonate concentration is determined as calcium carbonate, which can be calculated back to the hydrogen carbonate content depending on the pH of the sample. The test strips allow determination of the carbonate concentration in a range of 0 to 240 mg/l. For adjusting the absorption results, for instance calibration curves of various defined carbonate concentrations are established by carrying out measurements of the absorption of carbonate - dye complex in a range of defined concentrations of carbonate.

If the calibration curve (absorption versus concentration of carbonate) shows that the dependence of absorption and concentration is linear, absorption values (y-axis) can be plotted in a graph against the corresponding concentrations of carbonate used for calibration (x-axis), resulting in a (regression) line of slope "d" and an ordinate abscissa (x = 0) "b". b is either determined experimentally (absorption without compounds (I), but with all other components) or by extrapolation of the regression line to x = 0. Absorption can be expressed as product of slope and concentration plus ordinate abscissa as depicted above for chloride.

However, in most applications, hydrogen carbonate anions hardly ever occur in the absence of chloride ions, and thus the determination of the concentration of compounds (I) has to take account of both disturbing species. Absorption in this case is therefore expressed as the linear combination of three lines.

Outside linearity, calibration curves of different concentrations of compounds (I) in the presence of different concentrations of hydrogen carbonate and chloride ions have to be used.

It is also possible to apply the present determination method to inline measurements, e.g. by passing a portion of the water used for operating the water-steam system through a bypass having a flow-through sensor or flow-through measuring cell e.g. by analogy to the method of B. Wyrwas et al., J. Surfact. Deterg. 2014, 17, 191-198 or in analogy to the method of M. Lendi et al. Power Plant Chemistry 2015, 17(1), pp. 8-13.

The present determination method is suitable for samples [aqueous solutions or emulsions of the compound of the formula (I)] containing the compound of the formula (I) in an overall concentration of at least 0.01 mg/kg, preferably at least 0.05 mg/kg, more preferably at least 0.1 mg/kg, calculated as the acid form of the compound of formula (I) and based on the total weight of the aqueous solution or emulsion. The method works well up to an overall concentration of 2 mg/kg or even somewhat higher. In case of higher concentrations, for example if the absorption is above 1.6, it is advisable to dilute the sample in a defined way.

The present method uses the relatively harmless $C_8$-$C_{10}$ alkanols as extractants and avoids the distinctly more hazardous chloroform used in the prior art methods for determining the concentration of anionic surfactants such as dodecylbenzene sulfonate.

The invention is illustrated in more detail in the following examples and figures.

**Examples**

Products and apparatus used

The following products were used in the test procedures:

C-1: Crodasinic™ O: oleyl sarcosine; from Croda

C-2: Crodasinic™ C: cocoyl sarcosine; sarcosine amide of the fatty acids of coco oil; from Croda

Cmp-1: Armeen™ OD: oleyl amine; from Nouryon

Cmp-2: Duomeen™ O: oleylpropylene diamine; from Nouryon

P-1: composition containing 2.0% by weight of C-1, 27.0% by weight of diethylethanolamine and 71% by weight of deionized water

P-2: composition containing 2.0% by weight of C-2, 27.0% by weight of diethylethanolamine and 71% by weight of deionized water

Cmp-P-1: composition containing 2.0% by weight of Cmp-1, 27.0% by weight of diethylethanolamine, 0.6% by weight of caprylic acid and 70.4% by weight of deionized water

Remark: Cmp-P-1 contains caprylic acid for stabilization. This is not required for P-1 and P-2.

The following pilot boiler system was used:

1.5 1 pilot boiler with natural circulation, configured such that it is possible to take samples from the steam and also from the water phase during the whole trial.

It has to be noted that in pressurized water-steam system on an industrial scale, distinctly lower concentrations than used in the following pilot boiler experiments are needed. One reason is that the retention time, i.e. is the time in which the steam has once completely passed through a defined section of the system, is generally longer in industrial systems than in the present pilot boiler.

As an example, the retention times in a triple pressure CCGT (combined cycle gas turbine) power plant are compared with those of the presently used pilot boiler:

[Table 1a]

| Plant/Boiler parts | CCGT power plant | Pilot boiler |
|---|---|---|
| HP drum (T/p/V) | ($324°$ C / 11.9 MPa / 55 $m^3$) | ($311°$ C / 10 MPa / 2.04$\times 10^{-3}$ $m^3$) |
| Retention time [s] | 4.6 | 0.962 |
| LP evaporator (T/p/V) | ($156°$ C / 0.57 MPa / 10.7 $m^3$) | ($180°$ C / 1 MPa / 13.7 $\times 10^{-6}$ $m^3$) |
| Retention time [s] | 1.3 | 0.004 |
| LP drum (T/p/V) | ($156°$ C / 0.57 MPa / 33 $m^3$) | ($180°$ C / 1 MPa / 2.04 $\times 10^{-3}$ $m^3$) |
| Retention time [s] | 4.1 | 0.958 |
| **HP = high pressure; LP = low pressure** | | |

As can be seen, the retention time in the pilot boiler is distinctly shorter. A shorter retention time means that the N-acylsarcosines have less time to deploy their anti-corrosive action, requiring thus higher concentrations to obtain the same effect as in a system with a longer retention time.

Moreover, in many plants of industrial scale, the anticorrosive agents are dosed continuously or periodically. This also diminishes the required concentration for obtaining the desired degree of corrosion protection as compared to the pilot boiler, where the anticorrosive agent is dosed in one portion at the beginning of the experiment.

Example 1: Determination of the distribution ratio

The distribution ratio (DR) shows how a substance distributes between water and steam phase. A value above 1 indicates that a higher concentration accumulates in the steam phase than in water phase, whereas a value < 1 shows a higher concentration of the substance in water than in steam.

The distribution ratio is calculated as follows:

$$\text{DR (distribution ratio)} = c \text{ (substance in steam)} : c \text{ (substance in water)}$$

The distribution ratio was determined at 20 - 60 bar (2-6 MPa) (213 - 277°C) in the pilot boiler system. The concentration of each substance was determined as COD value (chemical oxygen demand) in mg $O_2$/l with cuvette tests from Hach Lange GmbH, Germany (LCK314).

1.5 1 of ultrapure water (18.2 m$\Omega$) were filled into the boiler. All valves were closed, the stirring speed was set to 150 rpm and the internal temperature to 60°C. The whole system was purged with nitrogen at approximately 5 bar (0.5MPa). After 60°C were held for 15 min, 300 mg of the material to be tested was added (concentration in the boiler: 200 mg/1). The internal temperature was then set to 213°C. After the set temperature and pressure had been constant for at least 6 hours, samples were taken. The internal temperature was then set to 252°C. After the set temperature and pressure had been constant for at least 6 hours, samples were taken. The internal temperature was then set to 276°C. After the set temperature and pressure had been constant for at least 6 hours, samples were taken. The concentration of each substance was determined as COD value (chemical oxygen demand) in mg $O_2$/ l with cuvette tests from Hach Lange GmbH, Germany (LCK314). The results are compiled in tables 1b, 2 and 3

[Table 1b]

| Table 1b: Distribution rate of C-1 (oleyl sarcosine; 200 mg/l) | | | | |
|---|---|---|---|---|
| Temperature ($°$ C) | Pressure [bar (MPa)] | COD (mg $O_2$/l) Water phase | COD (mg $O_2$/l) Steam phase | DR |
| 213 | 20 (2) | 248 | 137 | 0.55 |

(continued)

| Table 1b: Distribution rate of C-1 (oleyl sarcosine; 200 mg/l) | | | | |
|---|---|---|---|---|
| Temperature (° C) | Pressure [bar (MPa)] | COD (mg $O_2$/l) Water phase | COD (mg $O_2$/l) Steam phase | DR |
| 252 | 40 (4) | 253 | 119 | 0.47 |
| 276 | 60 (6) | 198 | 131 | 0.66 |

[Table 2]

| Table 2: Distribution rate of C-2 (cocoyl sarcosine; 200 mg/l) | | | | |
|---|---|---|---|---|
| Temperature (° C) | Pressure [bar (MPa)] | COD (mg $O_2$/l) Water phase | COD (mg $O_2$/l) Steam phase | DR |
| 213 | 20 (2) | 419 | 81.9 | 0.20 |
| 252 | 40 (4) | 147 | 79 | 0.53 |
| 276 | 60 (6) | 167 | 92.8 | 0.56 |

[Table 3]

| Table 3: Distribution rate of Cmp-1 (oleyl amine; 200 mg/l) | | | | |
|---|---|---|---|---|
| Temperature (° C) | Pressure [bar (MPa)] | COD (mg $O_2$/l) Water phase | COD (mg $O_2$/l) Steam phase | DR |
| 213 | 20 (2) | 359.0 | 83.1 | 0.23 |
| 252 | 40 (4) | 156.0 | 76 | 0.48 |
| 276 | 60 (6) | 106 | 72 | 0.68 |

As can be seen, C-1 and C-2 have distribution ratios suitable for the desired purpose and comparable to those of Cmp-1.

In these experiments, the N-acylsarcosines (as well as oleyl amine) were used in higher concentrations than provided for the method of the invention. Higher concentrations allow a more precise analysis of the distribution rate than lower ones, where errors of measurement have more impact. The purpose of these experiments is just to show that the present N-acylsarcosines have a water/steam distribution similar to the well-established oleyl amine. The same (relative) behavior can be expected when lower concentrations are used.

Example 2: Corrosion inhibition using non-formulated products C-1, C-2 and Cmp-1 measured with electrochemical impedance spectroscopy (EIS) (not according to the invention)

EIS measurements were used as a method to show corrosion protection behavior of the test compounds.

For electrochemical impedance measurements the following equipment was used

- Rotating disc Hach EDI 101 with speed control unit CTV101 (500 rpm);
- Potentiometer Autolab PG Stat 12 controlled by Nova 1.11 software (Methrom);
- Working electrode: Origalys mild steel electrode tips having a diameter of 5 mm and a tip surface of 0.196 cm$^2$;
- Counter electrode: Radiometer platinum;
- Origalys Ag/AgCl reference electrode;
- 600 mL beaker;
- Heating plate;
- pH-meter Knick Portamess with temperature compensation unit and a SE102N electrode;
- Pt 100 thermometer for temperature control at the beginning and the end of the experiment.

The working electrodes were prepared by grinding the mild steel electrode tip at 150 rpm using a grinder and silicon carbide grinding paper with a grit of P1200, P2500 and P4000 until a plane surface was accomplished.

0.2 g of NaCl were dissolved in 1l of ultrapure water (18.2 mΩ) in a beaker and the substances to be tested (C-1, C-2 and Cmp-1) were added to give a concentration of 50 mg/l. The pH was set with ammonia (1% dilution) to 9.0 (+/- 0.05). EIS measurements were carried as described in the following.

EIS measurements

400 mL of the test water were filled into 600 mL beaker. The rotating disk working electrode with the mild steel electrode tip, the Pt-reference electrode and the Ag/AgCl reference electrode were placed into the solution as follows: Going from the electrode tip in the middle: 0.03 cm to the left the counter electrode was placed and 4.5 cm on the right the reference electrode was placed. The electrode tip was placed about 90% deep into the solution and the other electrodes are placed about the same height into the solution.

The test was started within 2 minutes after the electrode tip had been grinded to avoid any oxidation on the surface and to guarantee the reproducibility of the test. The speed control unit of the rotating disk was started with a rotation speed of 500 rpm.

The measurement was started with an open circuit potential (OCP). For this, the voltage of the working electrode was measured against a reference electrode in order to set a start potential for the actual measurement. The actual potentiostatic measurement is conducted by a frequency scan with frequency response analyzer (FRA). All key parameters of the OCP and FRA are mentioned below.

Test - parameters:

- Current range: 1mA,
- OCP determination max 120 sec,
- Detection limit: $10^6$,
- Amplitude: 0.01,
- Logarithmic,
- Frequencies: 65000 Hz to 0.005 Hz (72 frequencies total),
- Integration time: 0.125 sec.,
- Automatic current range: from 100 nA to 100mA,
- Wave type: single sine.

5 measurements every 20 min (from 0 min to 100 min) were made.

From the observed parameters (frequency $\omega$, excitation signal $E_t$, response signal $I_t$ and the phase shift $\varphi$), the impedance $Z(\varphi)$ was calculated, which is a complex number having a real part $Z'$ and an imaginary part $Z''$ which are shown as a Nyquist plot: $-Z''$ vs $Z'$ or Bode plot. Further reference is made to C. Foret et al., Power Plant Chemistry 2014, 16(5), pp. 284-292, in particular to equations (1) to (4) on page 364. The evaluation of the data can be done either graphically or calculated via Nova software or Excel. The results of the measurements are converted with the metal surface value of $0.196 cm^2$ in order to get the actual results in $Z''$ vs $Z'$ ($\Omega \cdot cm^2$). From the Nyquist plot, the polarization resistance $R_p$ can be calculated as from the intercept of the Nyquist plot with the X axis at low frequency $Z'(\omega \rightarrow 0)$ and the intercept at high frequency $Z'(\omega \rightarrow \infty)$ according to the following equation $R_p = Z'(\omega \rightarrow 0) - Z'(\omega \rightarrow 0)$. Possible fittings for determining the polarization resistance $R_p$ are made by nova software. The higher the polarization resistance $R_p$ the better the corrosion resistance. For practical reasons it is sufficient to calculate polarization resistance $R_p$ by the following equation:

$$R_p = Z'(\omega = 0.32 \text{ Hz}) - Z'(\omega = 63 \text{ kHz}).$$

The Nyquist plot of the measurement at t = 100 min is shown in figure 1. These results are representative for the results obtained at the other 4 measurement points which all showed an analogous behavior. For interpreting the plot, it has to noted that the bigger $\Delta Z$ (Ohm $\cdot cm^2$) (-> x axis) in the Nyquist plot from left to right, the better the corrosion protection on mild steel.

As the plot shows, compounds C-1 and C-2 show a better corrosion inhibition compared to Cmp-1.

Example 3: Corrosion tests at 252 °C (40 bar:4MPa) on carbon steel surfaces using non-formulated products C-1, C-2 and Cmp-1

Two mild steel C1010 coupons (steel St 37) of $16.6 cm^2$ were hung into the steam phase of a pilot boiler. The substance to be tested was added to 1.7 1 of ultrapure water (18.2 m$\Omega$) to give a concentration of either 10 mg/l, 5 mg/l, 2.5 mg/l or 1 mg/l (the latter concentration only for C-2). Cmp-1 was tested only at 10 mg/l. For comparative tests, no substance was added. The pH was set in each case with ammonia (24,5%) to 9.2 (+/- 0.05). 200 ml of the test water were removed for separate analysis and the remaining 1.5 1 were filled into the boiler. All valves were closed, the stirring speed was set to 150 rpm and the test water in the boiler was heated to 252°C and kept at this temperature and at a resulting pressure of 40 (4MPa) bar for 24 h. Samples were taken from the steam phase when the desired temperature was achieved and then after 2 h, 20 h, 22 h and 24 h. A last sample from the boiler vessel was taken after shutdown (i.e. after pressure release and cooling).

The total iron content in the samples was determined with FAAS (flame atomic absorption spectroscopy). To this purpose, the sample was shaken and 10 ml were transferred into a 15 ml vial. 0.5 ml of HCl (32 %) were added and the vials were then heated to 170°C for 30 min. After cooling, the iron concentration was measured by FAAS. Detection limit of this method is 0.1 mg Fe/l. The results are compiled in table 4.

[Table 4]

| Table 4:Total iron content in steam of pilot boiler operated at 252° C and 40 bar (4 MPa) | | | | | | | |
|---|---|---|---|---|---|---|---|
| Fe [mg/l] | a | b | c | d | e | f | g |
| C-1 [10 ppm] | n.d. | <0.1 | <0.1 | 0.3 | 0.23 | 0.18 | <0.1 |
| C-2 [10 ppm] | n.d. | 0.1 | <0.1 | <0.1 | <0.1 | <0.1 | <0.1 |
| Cmp-1 [10 ppm] | n.d. | n.d. | <0.1 | 2.8 | 7.1 | 6.2 | 3.3 |
| | | | | | | | |
| C-1 [5 ppm] | <0.1 | <0.1 | <0.1 | n.d. | <0.1 | <0.1 | <0.1 |
| C-2 [5 ppm] | <0.1 | <0.1 | n.d. | <0.1 | <0.1 | <0.1 | <0.1 |
| | | | | | | | |
| C-1 [2.5 ppm] | <0.1 | <0.1 | n.d. | <0.1 | <0.1 | <0.1 | <0.1 |
| C-2 [2.5 ppm] | <0.1 | <0.1 | <0.1 | n.d. | <0.1 | <0.1 | <0.1 |
| | | | | | | | |
| C-2 [1 ppm] | n.d. | n.d. | n.d. | n.d. | <0.1 | n.d. | 0.1 |
| | | | | | | | |
| DI water* | <0.1 | <0.1 | n.d. | 1.5 | 6.8 | 7.9 | 4.6 |
| **a Fe concentration [mg/l] in solution before thermal treatment** <br> **b Fe concentration [mg/l] in steam after reaching 252° C** <br> **c Fe concentration [mg/l] in steam after 2 h** <br> **d Fe concentration [mg/l] in steam after 20 h** <br> **e Fe concentration [mg/l] in steam after 22 h** <br> **f Fe concentration [mg/l] in steam after 24 h** <br> **g Fe concentration [mg/l] in boiler water after shutdown** <br> **\* Deionized water; alkalized to pH 9.2** <br> **n.d. not determined** | | | | | | | |

As can be seen, the Fe concentration in steam produced from water treated with the N-acylsarcosines C-1 and C-2 is distinctly lower than from non-treated water as well as from oleyl amine-treated water.

The corrosion rate of the steel coupons was determined as follows: After shutdown, the coupons were removed from the boiler and corrosion products and deposits were roughly removed with water and a soft brush. Then the coupons were cleaned for 3 minutes with a pickling solution (composed of 230 ml of HCl (37%), 5 ml of Korantin ™ PP (containing propoxylated propargyl alcohol; from BASF SE) and 765 ml of deionized water), rinsed carefully first with deionized water and then with ethanol, dried at 105°C and weighed. It has to be noted that the average loss of steel coupons by pickling is 0.45 mg per minute of pickling time. The corrosion rate CR in mm/a was calculated from the weight loss ($d_{weight}$ [mg]) using the following formula:

# Formula 1

$$CR\ [mm/a] = f \ \times \ \frac{d_{weight}\ [mg]}{number\ of\ testing\ days}$$

**f for steel St 37 is 0.028.**

The results are compiled in table 5.

[Table 5]

| Table 5: Corrosion rates of coupons placed in steam phase of pilot boiler operated at 252° C and 40 bar (4 MPa) | | | |
|---|---|---|---|
| Coupon | Weight before treatment [g] | Weight after pickling [g] | Corrosion rate [mm/a] |
| 11a | 8.6965 | 8.6942 | 0.0644 |
| 11b | 8.5974 | 8.5967 | 0.0196 |
| 21a | 8.7002 | 8.6996 | 0.0168 |
| 21b | 8.6941 | 8.6928 | 0.0364 |
| Cmp-11a | 8.7005 | 8.6839 | 0.4648 |
| Cmp-11b | 8.5397 | 8.5281 | 0.3248 |
| | | | |
| 12a | 8.5994 | 8.5973 | 0.0588 |
| 12b | 8.6110 | 8.6091 | 0.0532 |
| 22a | 8.6120 | 8.6100 | 0.0560 |
| 22b 8.6260 | 8.6260 | 8.6242 | 0.0504 |
| | | | |
| 13a | 8.6004 | 8.5984 | 0.056 |
| 13b | 8.6034 | 8.6013 | 0.0588 |
| 23a | 8.6960 | 8.6939 | 0.0588 |
| 23b | 8.5505 | 8.5488 | 0.0476 |
| | | | |
| 24a | 8.5655 | 8.5637 | 0.0504 |
| 24b | 8.6200 | 8.6174 | 0.0728 |
| | | | |
| DI-1a | 8.5380 | 8.5163 | 0.6076 |
| DI-1b | 8.6082 | 8.5862 | 0.6160 |

Coupon numbers:

11, 12 and 13 indicates treatment with C-1 at 10 ppm (11), 5 ppm (12) and 2.5 ppm (13). 21, 22, 23 and 24 indicates treatment with C-2 at 10 ppm (21), 5 ppm (22), 2.5 ppm (23) and 1 ppm (24). Cmp-11 indicates treatment with Cmp-1 at 10 ppm. DI indicates no treatment (but, like the treated water, alkalized to pH 9.2).

In detail:

11a/b, 12a/b and 13a/b designate coupons placed in steam; water treatment with 10 ppm (11), 5 ppm (12) and 2.5 ppm (13) of C-1, respectively.

21a/b, 22a/b, 23a/b and 24a/b designate coupons placed in steam; water treatment with 10 ppm (21), 5 ppm (22), 2.5 ppm (23) and 1 ppm (24) of C-2, respectively. Cmp-11a/b designates coupons placed in steam; water treatment with 10 ppm of Cmp-1.

DI-1a/b designate coupons placed in steam; no water treatment.

As can be seen, corrosion rate of coupons placed in steam produced from water treated with the N-acylsarcosines C-1 and C-2 is distinctly lower than from non-treated water as well as from oleyl amine-treated water.

Example 4: Corrosion tests at 252 °C (40 bar:4MPa) on carbon steel surfaces using compositions P-1 and P-2

Two mild steel C1010 coupons (steel St 37) of 16.6 cm$^2$ were installed in the boiler vessel (water phase), and two further coupons were hung into the steam phase. The composition to be tested was added to 1.7 1 of ultrapure water (18.2 m$\Omega$) to give a concentration of 500 mg/l (= 10 mg/l of active compound C-1 or C-2). 200 ml of the test water were removed for separate analysis and the remaining 1.5 1 were filled into the boiler. All valves were closed, the stirring speed was set to 150 rpm and the test water in the boiler was heated to 252°C and kept at this temperature and at a resulting pressure of 40 bar (4MPa) for 96 h. Samples were taken from the water phase and the steam phase after 2 h, 48 h, 72 h and 96 h. A last sample from the boiler vessel was taken after shutdown (i.e. after pressure release and cooling).

The total iron content in the samples was determined with FAAS (flame atomic absorption spectroscopy). To this purpose, the sample was shaken and 10 ml were transferred into a 15 ml vial. 0.5 ml of HCl (32 %) were added and the vials were then heated to 170°C for 30 min. After cooling, the iron concentration was measured by FAAS. Detection limit of this method is 0.1 mg Fe/l. The results are compiled in table 6.

[Table 6]

| Table 6: Total iron content in steam and water of pilot boiler operated at 252° C and 40 bar (4 MPa) | | | | | | | | | |
|---|---|---|---|---|---|---|---|---|---|
| Fe [mg/l] | h1 | h2 | j1 | j2 | k1 | k2 | l1 | l2 | m |
| P-1 | 0.13 | <0.1 | <0.1 | <0.1 | <0.1 | <0.1 | 0.21 | <0.1 | <0.1 |
| P-2 | <0.1 | <0.1 | <0.1 | <0.1 | 0.57 | <0.1 | 0.61 | <0.1 | <0.1 |
| **h1 Fe concentration [mg/l] in steam after 2 h** <br> **h2 Fe concentration [mg/l] in water after 2 h** <br> **j1 Fe concentration [mg/l] in steam after 48 h** <br> **j2 Fe concentration [mg/l] in water after 48 h** <br> **k1 Fe concentration [mg/l] in steam after 72 h** <br> **k2 Fe concentration [mg/l] in water after 72 h** <br> **l1 Fe concentration [mg/l] in steam after 96 h** <br> **l2 Fe concentration [mg/l] in water after 96 h** <br> **m Fe concentration [mg/l] in boiler water after shutdown** | | | | | | | | | |

Corrosion rate of the steel coupons was determined as follows: After shutdown, the coupons were removed from the boiler and corrosion products and deposits were roughly removed with water and a soft brush. Then the coupons were cleaned for 3 minutes with a pickling solution (composed of 230 ml of HCl (37%), 5 ml of Korantin $^{TM}$ PP (containing propoxylated propargyl alcohol; from BASF SE) and 765 ml of deionized water), rinsed carefully first with deionized water and then with ethanol, dried at 105°C and weighed. It has to be noted that the average loss of steel coupons by pickling is 0.45 mg per minute of pickling time. The corrosion rate CR in mm/a was calculated from the weight loss ($d_{weight}$ [mg]) using the following formula:

### Formula 2

$$CR\ [mm/a] = f \times \frac{d_{weight}\ [mg]}{number\ of\ testing\ days}$$

f for steel St 37 is 0.028.

The results are compiled in table 7.

[Table 7]

Table 7: Corrosion rates of coupons placed in steam phase and in water phase of pilot boiler operated at 252° C and 40 bar (4 MPa)

| Coupon | Weight before treatment [g] | Weight after pickling [g] | Corrosion rate [mm/a] |
|---|---|---|---|
| S-P-11a | 8.7074 | 8.6954 | 0.0672 |
| S-P-11b | 8.6865 | 8.6756 | 0.0610 |
| W-P-11a | 8.6941 | 8.6911 | 0.0168 |
| W-P-11b 8.6999 | 8.6935 | 0.0358 | |
| | | | |
| S-P-21a | 8.2342 | 8.2197 | 0.0812 |
| S-P-21b | 8.6888 | 8.6773 | 0.0644 |
| W-P-21a | 8.5963 | 8.5919 | 0.0246 |
| W-P-21b | 8.7038 | 8.7002 | 0.0202 |

Coupon numbers:
S designates coupons placed in steam, W designates coupons placed in water. 11 indicates treatment with P-1. 21 indicates treatment with P-2.

In detail:

S-P-11a and S-P-11b designate the two coupons (a and b) placed in steam; water treatment with 500 ppm of P-1.
W-P-11a and W-P-11b designate the two coupons (a and b) placed in water; water treatment with 500 ppm of P-1.
S-P-21a and S-P-21b designate the two coupons (a and b) placed in steam; water treatment with 500 ppm of P-2.
W-P-21a and W-P-21b designate the two coupons (a and b) placed in water; water treatment with 500 ppm of P-2.

Example 5: Corrosion tests at 277 °C (60 bar:6MPa) on carbon steel surfaces using composition P-2

Two mild steel C1010 coupons (steel St 37) of 16.6 cm$^2$ were hung into the steam phase of a pilot boiler. The composition P-2 was added to 1.7 l of ultrapure water (18.2 m$\Omega$) to give a concentration of 500 mg/l (= 10 mg/l of active compound C-2). For comparative tests, deionized water alkalized with 135 ppm of diethylethanolamine was used. 200 ml of the test water were removed for separate analysis and the remaining 1.5 l were filled into the boiler. All valves were closed, the stirring speed was set to 150 rpm and the test water in the boiler was heated to 277°C and kept at this temperature and at a resulting pressure of 60 bar (6MPa) for 72 h. Samples were taken from the water phase and the steam phase after 2 h, 24 h, 48 h and 72 h. A last sample from the boiler vessel was taken after shutdown (i.e. after pressure release and cooling).

The total iron content in the samples was determined with FAAS (flame atomic absorption spectroscopy). To this purpose, the sample was shaken and 10 ml were transferred into a 15 ml vial. 0.5 ml of HCl (32 %) were added and the vials were then heated to 170°C for 30 min. After cooling, the iron concentration was measured by FAAS. Detection limit of this method is 0.1 mg Fe/l. The results are compiled in table 8.

[Table 8]

Table 8: Total iron content in steam of pilot boiler operated at 277° C and 60 bar (6 MPa)

| Fe [mg/l] | n | o | p | q | r |
|---|---|---|---|---|---|
| P-2 | 0.16 | <0.1 | <0.1 | <0.1 | 0.17 |
| | | | | | |

(continued)

| Table 8: Total iron content in steam of pilot boiler operated at 277° C and 60 bar (6 MPa) | | | | | |
|---|---|---|---|---|---|
| Fe [mg/l] | n | o | p | q | r |
| DI water* | n.d. | 3.7 | 16 | 9.7 | 0.99 |
| **n Fe concentration [mg/l] in steam after 2 h**<br>**o Fe concentration [mg/l] in steam after 24 h**<br>**p Fe concentration [mg/l] in steam after 48 h**<br>**q Fe concentration [mg/ml] in steam after 72 h**<br>**r Fe concentration [mg/l] in boiler water after shutdown**<br>**\* Deionized water; alkalized with 135 ppm of diethylethanolamine** | | | | | |

Corrosion rate of the steel coupons was determined as follows: After shutdown, the coupons were removed from the boiler and corrosion products and deposits were roughly removed with water and a soft brush. Then the coupons were cleaned for 3 minutes with a pickling solution (composed of 230 ml of HCl (37%), 5 ml of Korantin ™ PP (containing propoxylated propargyl alcohol; from BASF SE) and 765 ml of deionized water), rinsed carefully first with deionized water and then with ethanol, dried at 105°C and weighed. It has to be noted that the average loss of steel coupons by pickling is 0.45 mg per minute of pickling time.

The corrosion rate CR in mm/a was calculated from the weight loss ($d_{weight}$ [mg]) using the following formula:

## Formula 3

$$CR\ [mm/a] = f \times \frac{d_{weight}\ [mg]}{\text{number of testing days}}$$

**f for steel St 37 is 0.028.**

The results are compiled in table 9.

[Table 9]

| Table 9: Corrosion rates of coupons placed in steam phase of pilot boiler operated at 277° C and 60 bar (6 MPa) | | | |
|---|---|---|---|
| Coupon | Weight before treatment [g] | Weight after pickling [g] | Corrosion rate [mm/a] |
| P-21c | 8.6067 | 8.6061 | 0.0056 |
| P-21d | 8.5912 | 8.5902 | 0.0093 |
| | | | |
| DI-1c | 8.6761 | 8.6548 | 0.1988 |
| DI-1d | 8.7009 | 8.6791 | 0.2035 |

Coupon numbers:

21 indicates treatment with P-2. DI indicates no treatment (but alkalized with 135 ppm of diethylethanolamine).

In detail:

P-21c and P-21d designate the two coupons (c and d) placed in steam; water treatment with 500 ppm of P-2.
DI-1c and DI-1d designate the two coupons (c and d) placed in steam; no water treatment.

Example 6: Corrosion tests at 252 °C (40 bar:4MPa) on copper surfaces using compositions P-1, P-2 and Cmp-P-1

Two copper coupons (copper SF-Cu; CDA 110; 99.9% by weight of Cu, 0.04% by weight of O) were hung into the steam phase of a pilot boiler. The composition to be tested was added to 1.7 1 of ultrapure water (18.2 mΩ) to give a concentration of either 500 mg/l (= 10 mg/l of Cmp-1) or 125 mg/l ( = 2.5 mg/l of active compound C-1 or C-2). For comparative tests, deionized water alkalized with 135 ppm of diethylethanolamine was used. 200 ml of the test water were removed for separate analysis and the remaining 1.5 l were filled into the boiler. All valves were closed, the stirring speed was set to 150 rpm and the test water in the boiler was heated to 252°C and kept at this temperature and at a resulting pressure of 40 bar (4MPa) for 72 h. Samples were taken from the steam phase after 2 h, 24 h, 48 h and 72 h. A last sample from the boiler vessel was taken after shutdown (i.e. after pressure release and cooling).

The total copper content in the samples was determined with FAAS (flame atomic absorption spectroscopy). To this purpose, the sample was shaken and 10 ml were transferred into a 15 ml vial. 0.5 ml of HCl (32 %) were added and the vials were then heated to 170°C for 30 min. After cooling, the Cu concentration was measured by FAAS. Detection limit of this method is 0.1 mg Cu/l. The results are compiled in table 10.

[Table 10]

| Table 10: Total copper content in steam of pilot boiler operated at 252° C and 40 bar (4 MPa) | | | | | |
|---|---|---|---|---|---|
| Cu [mg/l] | s | t | u | v | w |
| P-1 [125 ppm] | <0.1 | <0.1 | <0.1 | <0.1 | <0.1 |
| P-2 [125 ppm] | <0.1 | <0.1 | <0.1 | <0.1 | 0.10 |
| | | | | | |
| Cmp-P-1 [500 ppm] | <0.1 | 0.54 | 0.25 | 0.13 | 0.27 |
| | | | | | |
| DI water* | n.d. | 0.5 | 0.51 | 0.46 | 0.54 |
| **s Cu concentration [mg/l] in steam after 2 h**<br>**t Cu concentration [mg/l] in steam after 24 h**<br>**u Cu concentration [mg/l] in steam after 48 h**<br>**v Cu concentration [mg/l] in steam after 72 h**<br>**w Cu concentration [mg/l] in boiler water after shutdown**<br>**\* Deionized water; alkalized with 135 ppm of diethylethanolamine** | | | | | |

Corrosion rate of the copper coupons was determined as follows: After shutdown, the coupons were removed from the boiler and corrosion products and deposits were roughly removed with water and a soft brush. Then the coupons were cleaned for 3 minutes with a pickling solution (composed of 100 g Ferrolin[t] 8621 from Kurita (containing amidosulfuric acid); and 900 g of deionized water), rinsed carefully first with deionized water and then with ethanol, dried at 105°C and weighed. It has to be noted that the average loss of the copper coupons by pickling is 0.12 mg per minute of pickling time.

The corrosion rate CR in mm/a was calculated from the weight loss ($d_{weight}$ [mg]) using the following formula:

## Formula 4

$$CR\ [mm/a] = f \ \times \ \frac{d_{weight}\ [mg]}{\text{number of testing days}}$$

f for copper SF-Cu is 0.024.

The results are compiled in table 11.

[Table 11]

| Table 11: Corrosion rates of coupons placed in steam phase of pilot boiler operated at 252° C and 40 bar (4 MPa) | | | |
|---|---|---|---|
| Coupon | Weight before treatment [g] | Weight after pickling [g] | Corrosion rate [mm/a] |
| P-11e | 9.5444 | 9.5430 | 0.0112 |

(continued)

| Table 11: Corrosion rates of coupons placed in steam phase of pilot boiler operated at 252° C and 40 bar (4 MPa) | | | |
|---|---|---|---|
| Coupon | Weight before treatment [g] | Weight after pickling [g] | Corrosion rate [mm/a] |
| P-11f 9.5687 | 9.5674 | 0.0104 | |
| | | | |
| P-22e | 9.5722 | 9.5710 | 0.0096 |
| P-22f 9.5554 | 9.5542 | 0.0096 | |
| | | | |
| Cmp-P-11e | 9.5244 | 9.5215 | 0.0232 |
| Cmp-P-11f 9.4922 | 9.4896 | 0.0208 | |
| | | | |
| DI-1e | 9.5132 | 9.5097 | 0.0280 |
| DI-1f | 9.5601 | 9.5573 | 0.0224 |

Coupon numbers:
11 indicates treatment with 125 ppm of P-1. 22 indicates treatment with 125 ppm of P-2. Cmp-P-11 indicates treatment with 500 ppm of Cmp-P-1. DI indicates no treatment (but alkalized with 135 ppm of diethylethanolamine).
In detail:

P-11e and P-11f designate the two coupons (e and f) placed in steam; water treatment with 125 ppm of P-1.
P-22e and P-22f designate the two coupons (e and f) placed in steam; water treatment with 125 ppm of P-2.
Cmp-P-11e and Cmp-P-11f designate the two coupons (e and f) placed in steam; water treatment with 500 ppm of Cmp-P-1.
DI-1e and DI-1f designate the two coupons (e and f) placed in steam; no water treatment.

Example 7: Corrosion tests at 311 °C (100 bar; 10 MPa) on carbon steel surfaces using non-formulated products C-2 and Cmp-2

Two mild steel C1010 coupons (steel St 37) of 16.6 cm$^2$ were hung into the steam phase of a pilot boiler. The substance to be tested was added to 1.7 1 of ultrapure water (18.2 m$\Omega$) to give a concentration of 2.5 mg/l. The pH was set in each case with ammonia (24,5%) to 9.2 (+/- 0.05). 200 ml of the test water were removed for separate analysis and the remaining 1.5 1 were filled into the boiler. All valves were closed, the stirring speed was set to 150 rpm and the test water in the boiler was heated to 311°C and kept at this temperature and at a resulting pressure of 100 bar (10 MPa) for 24 h. Samples were taken from the steam phase and the boiler water phase when the desired temperature was achieved and then after 2 h, 4 h and 24 h. A last sample from the boiler vessel was taken after shutdown (i.e. after pressure release and cooling).
The total iron content in the samples was determined with FAAS (flame atomic absorption spectroscopy). To this purpose, the sample was shaken and 10 ml were transferred into a 15 ml vial. 0.5 ml of HCl (32 %) were added and the vials were then heated to 170°C for 30 min. After cooling, the iron concentration was measured by FAAS. Detection limit of this method is 0.1 mg Fe/l. The results are compiled in table 12.

[Table 12]

| Table 12: Total iron content in steam of pilot boiler operated at 311° C and 100 bar (1 MPa) | | | |
|---|---|---|---|
| Fe [mg/l] | C-2 [2.5 ppm] | Cmp-2 [2.5 ppm] | DI water* |
| aa | <0.1 | <0.1 | <0.1 |
| bb | <0.1 | 0.12 | <0.1 |
| cc | <0.1 | <0.1 | <0.1 |
| dd | <0.1 | 0.25 | 0.96 |

(continued)

| Table 12: Total iron content in steam of pilot boiler operated at 311° C and 100 bar (1 MPa) | | | |
|---|---|---|---|
| Fe [mg/l] | C-2 [2.5 ppm] | Cmp-2 [2.5 ppm] | DI water* |
| ee | <0.1 | <0.1 | <0.1 |
| ff | <0.1 | 0.37 | 1.9 |
| gg | <0.1 | <0.1 | <0.1 |
| hh | 0.24 | 1.00 | 14.9 |
| ii | <0.1 | <0.1 | <0.1 |
| jj | <0.1 | 0.15 | 6.4 |
| **aa Fe concentration [mg/l] in solution before thermal treatment**<br>**bb Fe concentration [mg/l] in steam after reaching 311° C**<br>**cc Fe concentration [mg/l] in boiler water after reaching 311° C**<br>**dd Fe concentration [mg/l] in steam after 2 h**<br>**ee Fe concentration [mg/l] in boiler water after 2 h**<br>**ff Fe concentration [mg/l] in steam after 4 h**<br>**gg Fe concentration [mg/l] in boiler water after 4 h**<br>**hh Fe concentration [mg/l] in steam after 24 h**<br>**ii Fe concentration [mg/l] in boiler water after 24 h**<br>**jj Fe concentration [mg/l] in boiler water after shutdown**<br>**\* Deionized water; alkalized to pH 9.2** | | | |

As can be seen, the Fe concentration in steam produced from water treated with the N-acylsarcosine C-2 is distinctly lower than in steam produced from non-treated water and also lower than in steam produced from oleylpropylene diamine-treated water.

The corrosion rate of the steel coupons was determined as follows: After shutdown, the coupons were removed from the boiler and corrosion products and deposits were roughly removed with water and a soft brush. Then the coupons were cleaned for 3 minutes with a pickling solution (composed of 230 ml of HCl (37%), 5 ml of Korantin ™ PP (containing propoxylated propargyl alcohol; from BASF SE) and 765 ml of deionized water), rinsed carefully first with deionized water and then with ethanol, dried at 105°C and weighed. It has to be noted that the average loss of steel coupons by pickling is 0.45 mg per minute of pickling time. The corrosion rate CR in mm/a was calculated from the weight loss ($d_{weight}$ [mg]) using the following

## Formula 5

$$CR\ [mm/a] = f\ \times\ \frac{d_{weight}\ [mg]}{number\ of\ testing\ days}$$

f for steel St 37 is 0.028.

The results are compiled in table 13.

[Table 13]

| Table 13: Corrosion rates of coupons placed in steam and water phase of pilot boiler operated at 311° C and 100 bar (10 MPa) | | | | |
|---|---|---|---|---|
| Coupon | Weight before treatment [g] | Weight after pickling [g] | Corrosion rate [mm/a] | Average corro-sion rate [mm/a] |
| S-25a | 8.6896 | 8.6862 | 0.0952 | 0.0896 |
| S-25b | 8.7335 | 8.7305 | 0.0840 | |

(continued)

| Table 13: Corrosion rates of coupons placed in steam and water phase of pilot boiler operated at 311° C and 100 bar (10 MPa) | | | | |
|---|---|---|---|---|
| Coupon | Weight before treatment [g] | Weight after pickling [g] | Corrosion rate [mm/a] | Average corro-sion rate [mm/a] |
| W-25a | 8.7086 | 8.7051 | 0.0980 | 0.0952 |
| W-25b | 8.7328 | 8.7295 | 0.0924 | |
| Cmp-S-25a | 8.7315 | 8.7249 | 0.1848 | 0.1946 |
| Cmp-S-25b | 8.7116 | 8.7043 | 0.2044 | |
| Cmp-W-25a | 8.7278 | 8.7221 | 0.1596 | 0.1582 |
| Cmp-W-25b | 8.6897 | 8.6841 | 0.1568 | |
| | | | | |
| S-DI-a | 8.6818 | 8.6602 | 0.6048 | 0.5908 |
| S-DI-b | 8.7247 | 8.7041 | 0.5768 | |
| W-DI-a | 8.6882 | 8.6818 | 0.1792 | 0.1806 |
| W-DI-b | 8.7004 | 8.6939 | 0.1820 | |

Coupon numbers:
S designates coupons placed in steam, W designates coupons placed in water. 25 indicates treatment with C-2 at 2.5 ppm. Cmp-25 indicates treatment with Cmp-2 at 2.5 ppm. DI indicates no treatment (but, like the treated water, alkalized to pH 9.2).
In detail:

S-25a and S-25b designate the two coupons (a and b) placed in steam; water treatment with 2.5 ppm of C-2, respectively.
W-25a and W-25b designate the two coupons (a and b) placed in water; water treatment with 2.5 ppm of C-2, respectively.
Cmp-S-25a and Cmp-S-25b designate the two coupons (a and b) placed in steam; water treatment with 2.5 ppm of Cmp-2, respectively.
Cmp-W-25a and Cmp-W-25b designate the two coupons (a and b) placed in water; water treatment with 2.5 ppm of Cmp-2, respectively.
S-DI-a and S-DI-b designate the two coupons (a and b) placed in steam; no water treatment.
W-DI-a and W-DI-b designate the two coupons (a and b) placed in water; no water treatment.

As can be seen, corrosion rate of coupons placed in water as well as in steam produced from water treated with the N-acylsarcosine C-2 is distinctly lower than from non-treated water as well as from oleylpropylene diamine-treated water.

Example 8: Corrosion tests in a power plant using C-2 and Cmp-2

The test was carried out in a shell boiler with a design pressure of 15 bar (1.5 MPa), usually operated at 10 bar (1 MPa) at low loading conditions. At the beginning of the test, the boiler had been under normal, established operation for several years, using water continuously dosed with oleylpropylene diamine (Cmp-2), a standard anti-corrosion agent providing good corrosion protection. Between January 10, 2020 and July 28, 2020, the Fe concentration in the steam condensate as a measure for corrosion was determined on a weekly basis. During this time, the pump was operated at a pump stroke of 60% (dose rate 1.5 l/h).
On July 28, 2020 treatment with C-2 was started by discontinuing the addition of Cmp-2 and instead continually adding C-2 to the feed water in the same amount as Cmp-2 had been added beforehand. By September 16, 2020, Cmp-2 had been completely replaced by C-2. The period between July 28, 2020 and September 16, 2020 is termed "transition period" in the following. During this transition period, the Fe concentration in the steam condensate was further monitored on a weekly basis. During this time, the pump was operated at a pump stroke of 30% (dose rate 0.81/h).

September 16, 2020 is considered as the starting point of the C-2 treatment. The present results were obtained until April 14, 2021. The amount of C-2 in the feed water (= returned condensate plus fresh water to compensate water loss) and the steam condensate was determined on April 14, 2021, using the method described in the following example 10. The concentration of C-2 in the feed water was 0.16 mg/l (0.16 ppm) (average of two determinations showing 0.15 and 0.17 mg/1), and the concentration of C-2 in the steam condensate was <0.1 mg/l (<0.1 ppm; below detection limit) (two determinations).

Every week the Fe concentration in the steam condensate as a measure for corrosion was determined. During the largest part of the observed C-2 treatment (up to February 13, 2021), the pump was operated at a pump stroke of 30%; then it was enhanced to 60%.

To determine the Fe concentration, samples were taken weekly by an operator. To this purpose, the sample valve was opened and the initial liquid was flashed over 1 min to have a representative sample. The sample vials were washed twice with sample water in order to saturate the vial surface with the anticorrosion agent and thus minimize absorption of the anticorrosion agent to the vial surface in the sample to be examined. The Fe concentration was determined using FerroVer™ Iron Reagent Powder Pillows from Hach Lange GmbH, Germany.

The following table compiles the weekly average of Fe concentration in the steam condensate under treatment with Cmp-2, during the transition period and under treatment with C-2.

[Table 14]

| Treatment | Medium Fe concentration [mg/l] in steam condensate | Standard deviation |
|---|---|---|
| Cmp-2 | 2.85 | 3.23 |
| - (transition period) | 6.35 | 4.15 |
| C-2 | 2.17 | 1.51 |

The higher Fe concentrations during the transition period are presumably due to chemical desorption and adsorption processes on the plant surface during which Cmp-2 was stepwise replaced by C-2.

Surprisingly, C-2 showed a better anticorrosive effect than Cmp-2, and this despite of the fact that during the largest part of the observed C-2 treatment the pump was operated at a pump stroke of just 30%, i.e. half of the 60% pump stroke applied during the observed Cmp-2 treatment. A reduced pump stroke means a decreased rate with which the anticorrosive agent moves through the system and thus a reduced possibility to deploy its anti-corrosive effect. Thus, at 60% pump stroke, the anticorrosive action of C-2 can be expected to be even better.

Moreover, as can be seen, the standard deviation of the Fe concentration is distinctly lower in case of the C-2 treatment as compared to the Cmp-2 treatment, meaning that C-2 provides a more reliable corrosion protection than Cmp-2.

Example 9: Determination of the concentration of C-2 in a water sample without chloride interference

9.1 Preparation of the calibration curve

Five test samples each with a sample volume of 10.0 ml containing (1.) 0.1 mg/l, (2.) 0.2 mg/l, (3.) 0.5 mg/l, (4.) 1 mg/l and (5.) 2 mg/l of C-2 (used as a composition containing 2% by weight of C-2, 20% by weight of DEAE and 78% by weight of water) in deionized water were prepared. A blank sample with a sample volume of 10.0 ml containing deionized water only was provided. Each test sample and the blank sample were treated as described in the following:

The sample was filled into a 25 ml 1 inch (1 inch = 25.4 millimeters) cuvette. 2 ml of buffer solution pH 7.00 $\pm$ 0.02 (20°C) (composed of potassium dihydrogenphosphate, disodium hydrogenphosphate and water; from VWR chemicals) and then 0.2 ml of a methylene blue solution (0.05% in water) were added and the solution was mixed carefully. 1-Nonanol was filled into the cuvette to the mark of 20 ml (corresponding to 7.8 ml of 1-nonanol) and the cuvette was shaken vigorously for 10 s. After 7-9 min the organic phase had separated from the water phase. Ca. 5 ml of the organic phase were carefully removed with a Pasteur pipette and transferred into a 1 inch cuvette. First, the cuvette containing the organic extract from the blank sample was subjected to a photometric measurement in a DR3900 photometer from Hach Lange GmbH, Germany at 660 nm to serve as calibration; accordingly, the obtained value was set to '0' to be extracted from the results of the test samples. Then the cuvettes containing the organic extracts from the test samples were subjected to the blank-calibrated photometric measurement at 660 nm.

The absorptions obtained with the five concentrations were plotted in a graph with the concentration [mg/1] on the x-axis (horizontal axis) and the absorption on the y-axis (vertical axis) and a regression line was drawn. The regression line is depicted as line A in figure 2.

The slope of the line was determined as 0.40540 and the extrapolated absorption at 0 mg/l was determined as 0.0615. This leads to equation (6):

$$\text{absorption} = 0.40540 \times \text{concentration}_{C\text{-}2} + 0.0615 \quad (6)$$

From this, an unknown concentration of C-2 can be determined by solving equation (6) for the concentration:

$$\text{concentration}_{C\text{-}2} = (\text{absorption} - 0.0615) / 0.40540 \quad (7)$$

9.2 Determination of an unknown concentration of C-2

10.0 ml of the water test sample containing C-2 was filled into a 25 ml 1 inch cuvette. 10.0 ml of deionized water to be used for blank value test were filled into another 25 ml 1 inch cuvette. The following steps were carried out both with the test sample and with the blank. 2 ml of buffer solution pH 7.00 $\pm$ 0.02 (20°C) (composed of potassium dihydrogenphosphate, disodium hydrogenphosphate and water; from VWR chemicals) and then 0.2 ml of a methylene blue solution (0.05% in water) were added and the solution was mixed carefully. 1-Nonanol was filled into the cuvette to the mark of 20 ml (corresponding to 7.8 ml of 1-nonanol) and the cuvette was shaken vigorously for 10 s. After 7-9 min the organic phase had separated from the water phase. Ca. 5 ml of the organic phase were carefully removed with a Pasteur pipette and transferred into a 1 inch cuvette. First, the cuvette containing the organic extract from the blank was subjected to a photometric measurement in a DR3900 photometer from Hach Lange GmbH, Germany at 660 nm to serve as calibration; accordingly, the obtained value was set to '0' to be extracted from the result of the test sample. Then the cuvette containing the organic extract from the test sample containing C-2 was subjected to the blank-calibrated photometric measurement at 660 nm.

The concentration of C-2 was determined by inserting the observed absorption value in equation (7):

$$\text{concentration}_{C\text{-}2} = (\text{absorption} - 0.0615) / 0.40540 \quad (7)$$

Example 10: Determination of the concentration of C-2 in a water sample with chloride interference

10.1 Preparation of the calibration curves

24 test samples each with a sample volume of 10.0 ml containing chloride ions (added as HCl) and C-2 (used as a composition containing 2% by weight of C-2, 20% by weight of DEAE and 78% by weight of water) in the amounts listed in the below table in deionized water were prepared and filled into a 25 ml 1 inch cuvette. 10.0 ml of deionized water to be used for blank value test were filled into another 25 ml 1 inch cuvette.

[Table 15]

| No. | Conc. Cl- [mg/l] | Conc. C-2 [mg/l] |
|---|---|---|
| 1 | 31 | 0 |
| 2 | 62 | 0 |
| 3 | 156 | 0 |
| 4 | 218 | 0 |
| 5 | 311 | 0 |
| 6 | 0 | 0.2 |
| 7 | 31 | 0.2 |
| 8 | 62 | 0.2 |
| 9 | 156 | 0.2 |
| 10 | 218 | 0.2 |
| 11 | 311 | 0.2 |

(continued)

| No. | Cone. Cl⁻ [mg/l] | Cone. C-2 [mg/l] |
| --- | --- | --- |
| 12 | 0 | 0.5 |
| No. | Cone. Cl⁻ [mg/l] | Conc. C-2 [mg/l] |
| 13 | 31 | 0.5 |
| 14 | 62 | 0.5 |
| 15 | 156 | 0.5 |
| 16 | 218 | 0.5 |
| 17 | 311 | 0.5 |
| 18 | 0 | 1.0 |
| 19 | 31 | 1.0 |
| 20 | 62 | 1.0 |
| 21 | 156 | 1.0 |
| 22 | 218 | 1.0 |
| 23 | 311 | 1.0 |
| 24 | 0 | 2.0 |

Each test sample and the blank sample were treated as described in the following. The sample was filled into a 25 ml 1 inch cuvette. 2 ml of buffer solution pH 7.00 $\pm$ 0.02 (20°C) (composed of potassium dihydrogenphosphate, disodium hydrogenphosphate and water; from VWR chemicals) and then 0.2 ml of a methylene blue solution (0.05% in water) were added and the solution was mixed carefully. 1-Nonanol was filled into the cuvette to the mark of 20 ml (corresponding to 7.8 ml of 1-nonanol) and the cuvette was shaken vigorously for 10 s. After 7-9 min the organic phase had separated from the water phase. Ca. 5 ml of the organic phase were carefully removed with a Pasteur pipette and transferred into a 1 inch cuvette. First, the cuvette containing the organic extract from the blank sample was subjected to a photometric measurement in a DR3900 photometer from Hach Lange GmbH, Germany at 660 nm to serve as calibration; accordingly, the obtained value was set to '0' to be extracted from the result of the test sample. Then the cuvettes containing the organic extracts from the test samples were subjected to the blank-calibrated photometric measurement at 660 nm.

The absorptions obtained with the five or six Cl⁻ concentrations were plotted in a graph with the concentration of C-2 [mg/1] on the x-axis (horizontal axis) and the absorption on the y-axis (vertical axis); regression lines were drawn.

The regression line for conc.$_{Cl⁻}$ = 31 mg/l is depicted as line B in figure 2.

The regression line for conc.$_{Cl⁻}$ = 62 mg/l is depicted as line C in figure 2.

The regression line for conc.$_{Cl⁻}$ = 156 mg/l is depicted as line D in figure 2.

The regression line for conc.$_{Cl⁻}$ = 218 mg/l is depicted as line E in figure 2.

The regression line for conc.$_{Cl⁻}$ = 311 mg/l is depicted as line F in figure 2.

The absorption values of lines A to F in figure 2 at conc.$_{C-2}$ = 0 mg/l were plotted in a graph with the concentration of Cl⁻ [mg/1] on the x-axis (horizontal axis) and the absorption on the y-axis (vertical axis); and a regression line was drawn; see figure 3.

The slope of this line was determined as 0.00107 and the extrapolated absorption at 0 mg/l was determined as 0.0727. This leads to equation (8):

$$\text{absorption} = 0.00107 \times \text{concentration}_{Cl⁻} + 0.0727 \quad (8)$$

Combination of equations (7) and (8) leads to equation (9) (note: as ordinate intercept = extrapolated absorption at 0 mg/l, the value of equation (8) was used (0.0727) because it was determined with more data points than the value used in equation (7) and thus considered as exacter):

$$\text{absorption} = 0.40540 \times \text{concentration}_{C-2} + 0.00107 \times \text{concentration}_{Cl⁻} + 0.072 \quad (9)$$

Solving equation (9) for the concentration of C-2 leads to following equation (10):
**Formula 6**

$$\text{conc. (C-2) [mg/l]} = \frac{\text{absorption}}{0.40540} - (0.00264 \times \text{conc. (chloride) [mg/l]}) - 0.17933$$

$$(10)$$

10.2 Determination of an unknown concentration of C-2 in chloride-containing water The concentration of chloride ions in the water to be tested was determined with commercial test strips from Hach Lange GmbH, Germany. 10.0 ml of the water test sample containing C-2 and chloride ions was filled into a 25 ml 1 inch cuvette. 10.0 ml of deionized water to be used for blank value test were filled into another 25 ml 1 inch cuvette. The following steps were carried out both with the test sample and with the blank. 2 ml of buffer solution pH 7.00 ± 0.02 (20°C) (composed of potassium dihydrogenphosphate, disodium hydrogenphosphate and water; from VWR chemicals) and then 0.2 ml of a methylene blue solution (0.05% in water) were added and the solution was mixed carefully. 1-Nonanol was filled into the cuvette to the mark of 20 ml (corresponding to 7.8 ml of 1-nonanol) and the cuvette was shaken vigorously for 10 s. After 7-9 min the organic phase had separated from the water phase. Ca. 5 ml of the organic phase were carefully removed with a Pasteur pipette and transferred into a 1 inch cuvette. First, the cuvette containing the organic extract from the blank was subjected to a photometric measurement in a DR3900 photometer from Hach Lange GmbH, Germany at 660 nm to serve as calibration; accordingly, the obtained value was set to '0' to be extracted from the result of the test sample. Then the cuvette containing the organic extract from the test sample containing C-2 was subjected to the blank-calibrated photometric measurement at 660 nm.

The concentration of C-2 was determined by inserting the observed absorption value in following equation (11):
**Formula 7**

$$\text{conc. (C-2) [mg/l]} \pm \frac{\text{absorption}}{0.40540} - (0.00264 \times \text{conc. (chloride) [mg/l]}) - 0.17933$$

$$(11)$$

conc. = concentration

Example 11: Determination of the concentration of C-2 in a water sample with chloride and hydrogen carbonate interference

Calibration curves were prepared in analogy to example 10.1. Linear combination resulted in the following equation (12):
**Formula 8**

$$C_{C-2} \text{ [mg/l]} = \left(\frac{\text{absorption}}{0.446269}\right) - (0.002375 \times c_{\text{chloride}}) - (0.00042 \times c_{\text{CaCO3}}) - 0.19961$$

$$(12)$$

c = concentration

**Claims**

1. A method for providing corrosion protection to a pressurized water-steam system, which method comprises the addition of an N-acylsarcosine compound of the formula (I) or of a mixture of different N-acylsarcosine compounds of the formula (I)

$$R\text{-}C(=O)\text{-}N(CH_3)\text{-}CH_2\text{-}COOH \qquad (I)$$

where R is a linear or branched acyclic hydrocarbon group having 10 to 24 carbon atoms, or of a salt thereof;
where in case that a mixture of different N-acylsarcosine compounds of the formula (I) is used, in up to 30% by weight of the N-acylsarcosine compounds (I), based on the total weight of the mixture, R may also be a linear or branched acyclic hydrocarbon group having 4 to 9 carbon atoms;
where the N-acylsarcosine compound of the formula (I), a mixture of different N-acylsarcosine compounds of the formula (I) or a salt thereof is added to the water used for operating the water-steam system in such an amount that the average total concentration of the compound of formula (I) in the water contained in the water-steam system is in the range from 0.01 to 10 mg/kg;
where the pressure in the water-steam system during operation is at least 1 MPa (10 bar); where however in case that the water-steam system is a geothermal system, the pressure is from 0.2 to 6 MPa (2 to 60 bar).

2. The method of claim 1, where the N-acylsarcosine compound of the formula (I), a mixture of different N-acylsarcosine compounds of the formula (I) or a salt thereof is added to the water used for operating the water-steam system in such an amount that the average total concentration of the compound of formula (I) in the water contained in the water-steam system is in the range from 0.01 to 8 mg/kg, in particular in the range from 0.02 to 6 mg/kg.

3. The method of claim 2, where the N-acylsarcosine compound of the formula (I), a mixture of different N-acylsarcosine compounds of the formula (I) or a salt thereof is added to the water used for operating the water-steam system in such an amount that the average total concentration of the compound of formula (I) in the water contained in the water-steam system is in the range from 0.05 to 5 mg/kg, preferably in the range from 0.1 to 5 mg/kg, in particular in the range from 0.5 to 5 mg/kg and more particularly in the range from 0.5 to 3.5 mg/kg.

4. The method of claim 3, where the N-acylsarcosine compound of the formula (I), a mixture of different N-acylsarcosine compounds of the formula (I) or a salt thereof is added to the water used for operating the water-steam system in such an amount that the average total concentration of the compound of formula (I) in the water contained in the water-steam system is in the range from 0.5 to 3 mg/kg, in particular in the range from 0.8 to 2.5 mg/kg.

5. The method of any one of the preceding claims, for providing corrosion protection to those parts of the pressurized water-steam system which are in contact with steam and/or with the condensate; in particular with the steam and optionally also with the condensate.

6. The method of any one of the preceding claims, where the pressurized water-steam system contains internal surfaces made of or comprising ferrous materials, in particular steel; copper, copper alloys, aluminium, aluminium alloys or two or more of these materials, in particular steel, copper or both steel and copper.

7. The method of any one of the preceding claims, where R in formula (I) is selected from the group consisting of $C_{12}$-$C_{20}$-alkyl and $C_{12}$-$C_{20}$-alkenyl having 1, 2 or 3 C=C double bonds, where in case that a mixture of different N-acylsarcosine compounds of the formula (I) is used, in up to 25% by weight of the N-acylsarcosine compounds (I), based on the total weight of the mixture, R may also be $C_5$-$C_9$ alkyl; and in up to 55% by weight of the N-acylsarcosine compounds (I), based on the total weight of the mixture, R may also be selected from the group consisting of $C_{10}$-$C_{11}$-alkyl and $C_{10}$-$C_{11}$-alkenyl having 1 C=C double bond;

8. The method of any one of the preceding claims, where R in formula (I) on average has 12 to 18 carbon atoms.

9. The method of any one of the preceding claims, comprising the addition of an N-acylsarcosine compound of the formula (I) or a salt thereof in which R is derived from oleic acid, or comprising the addition of a mixture of different N-acylsarcosine compounds of the formula (I) or salts thereof, where the mixture is derived from coconut oil.

10. The method of any of the preceding claims, where the compound of the formula (I) is added to the water used for operating the water-steam system in the form of an aqueous solution or emulsion of the acid form of the compound of the formula (I) or of an ammonium or substituted ammonium salt thereof;

where preferably the concentration of the compound of the formula (I) in the aqueous solution or emulsion is in the range from 0.5 to 10 % by weight, calculated as the acid form of the compound of formula (I) and based on the total weight of the aqueous solution or emulsion; and/or
where preferably the aqueous solution or emulsion consists to at last 99.9 % of a mixture consisting of the compound of formula (I), water and optionally also ammonia and/or at least one organic amine.

11. The method of any one of the preceding claims, where the pressure in the water-steam system during operation is at least 2 MPa (20 bar), preferably at least 3 MPa (30 bar).

12. The method of any one of the preceding claims, where the water-steam system is a water-steam circuit.

13. The method of any one of the preceding claims, where the water-steam system comprises a boiler, in particular a drum boiler or a once-through steam generator;

    where preferably the water-steam system is a water-steam circuit, where during operation of the water-steam circuit a pH value of the water in the range of pH 7.5 to 12, preferably in the range of 8.0 to 11, in particular in the range of pH 8.5 to 10, as determined at 20°C, is maintained; and/or
    where preferably the water-steam system is a water-steam circuit, where during operation of the water-steam circuit the water the water contained in the water-steam cycle has a conductivity of at most 30 $\mu$S/cm as determined at 22°C.

14. The method of any one of the preceding claims, for providing corrosion protection to a pressurized water-steam system used for generating steam for the direct or indirect processing of food, cosmetics or pharmaceuticals.

15. The method of any one of claims 1 to 11, where the N-acylsarcosine compound or a mixture of different N-acylsarcosine compounds of the formula (I) or a salt thereof is added to the production well of a geothermal power plant.

16. The use of an N-acylsarcosine compound or a mixture of N-acylsarcosine compounds of the formula (I) or a salt thereof as defined in any one of claims 1 or 7 to 9 for providing corrosion protection to a pressurized water-steam system where the pressure in the water-steam system during operation is at least 1 MPa (10 bar), where however in case that the water-steam system is a geothermal system, the pressure is from 0.2 to 6 MPa (2 to 60 bar); where the use comprises the addition of the N-acylsarcosine compound or a mixture of different N-acylsarcosine compounds of the formula (I) or a salt thereof to the water used for operating the water-steam system in such an amount that the average total concentration of the compound of formula (I) in the water contained in the water-steam system is in the range of from 0.01 to 10 mg/kg, preferably in the range of from 0.01 to 8 mg/kg, more preferably in the range of from 0.02 to 6 mg/kg, even more preferably in the range of from 0.02 to 5 mg/kg, in particular in the range of from 0.05 to 5 mg/kg, more particularly in the range of from 0.1 to 5 mg/kg, even more particularly in the range of from 0.5 to 5 mg/kg, very particularly in the range of from 0.5 to 3.5 mg/kg, specifically in the range of from 0.5 to 3 mg/kg, and more specifically in the range from 0.8 to 2.5 mg/kg.

17. A method for determining the concentration of a compound of the formula (I) as defined in any of claims 1 or 7 or 9 in an aqueous solution or emulsion of the compound of the formula (I), which comprises the following steps:

    i) addition of a cationic phenothiazine dye to a defined amount of the aqueous solution or emulsion containing the compound of the formula (I) or a salt thereof;
    ii) subjecting the mixture of step i) to an extraction with a liquid extractant, which comprises at least 95 % by weight of the total amount of the extractant of a $C_8$-$C_{10}$ alkanol, in particular 1-nonanol;
    iii) separating the liquid extractant from the aqueous phase and
    iv) determining photometrically the concentration of the phenothiazine dye in the extractant.

18. The method of claim 17, where one, two, three or all four of following conditions a), b), c) and/or d) apply:

    a) prior to extraction the pH of the aqueous solution or emulsion of the compound of the formula (I) is adjusted to a pH in the range of 6.5 to 7.5, in particular in the range of 6.9 to 7.1, as determined at 20°C;
    b) prior to extraction the pH of the aqueous solution or emulsion of the compound of the formula (I) is adjusted to a pH in the range of 6.5 to 7.5, in particular in the range of 6.9 to 7.1, as determined at 20°C with an inorganic buffer;
    c) the cationic phenothiazine dye is methylene blue; and/or
    d) the aqueous solution or emulsion of the compound of the formula (I) to be analysed has a concentration of the compound of the formula (I) of at least 0.01 mg/kg, preferably of at least 0.05 mg/kg, in particular of at least 0.1 mg/kg, calculated as the acid form of the compound of formula (I) and based on the total weight of the aqueous solution or emulsion.

**Patentansprüche**

1.  Verfahren zur Bereitstellung von Korrosionsschutz für ein unter Druck stehendes Wasser-Dampf-System, wobei das Verfahren die Zugabe einer N-Acylsarcosinverbindung der Formel (I) oder einer Mischung verschiedener N-Acylsarcosinverbindungen der Formel (I)

$$R\text{-}C(=O)\text{-}N(CH_3)\text{-}CH_2\text{-}COOH \qquad (I)$$

wobei R für eine geradkettige oder verzweigte acyclische Kohlenwasserstoffgruppe mit 10 bis 24 Kohlenstoffatomen steht, oder eines Salzes davon, umfasst; wobei bei der Verwendung einer Mischung verschiedener N-Acylsarcosinverbindungen der Formel (I) in bis zu 30 Gew.-% der N-Acylsarcosinverbindungen (I), bezogen auf das Gesamtgewicht der Mischung, R auch für eine geradkettige oder verzweigte acyclische Kohlenwasserstoffgruppe mit 4 bis 9 Kohlenstoffatomen stehen kann;
wobei die N-Acylsarcosinverbindung der Formel (I), eine Mischung verschiedener N-Acylsarcosinverbindungen der Formel (I) oder ein Salz davon dem zum Betrieb des Wasser-Dampf-Systems verwendeten Wasser in einer solchen Menge zugesetzt wird, dass die durchschnittliche Gesamtkonzentration der Verbindung der Formel (I) in dem im Wasser-Dampf-System enthaltenen Wasser im Bereich von 0,01 bis 10 mg/kg liegt;
wobei der Druck des Wasser-Dampf-Systems während des Betriebs mindestens 1 MPa (10 bar) beträgt; wobei jedoch, wenn es sich bei dem Wasser-Dampf-System um ein geothermales System handelt, der Druck 0,2 bis 6 MPa (2 bis 60 bar) beträgt.

2.  Verfahren nach Anspruch 1, wobei die N-Acylsarcosinverbindung der Formel (I), eine Mischung verschiedener N-Acylsarcosinverbindungen der Formel (I) oder ein Salz davon dem zum Betrieb des Wasser-Dampf-Systems verwendeten Wasser in einer solchen Menge zugesetzt wird, dass die durchschnittliche Gesamtkonzentration der Verbindung der Formel (I) in dem im Wasser-Dampf-System enthaltenen Wasser im Bereich von 0,01 bis 8 mg/kg liegt, insbesondere im Bereich von 0,02 bis 6 mg/kg.

3.  Verfahren nach Anspruch 2, wobei die N-Acylsarcosinverbindung der Formel (I), eine Mischung verschiedener N-Acylsarcosinverbindungen der Formel (I) oder ein Salz davon dem zum Betrieb des Wasser-Dampf-Systems verwendeten Wasser in einer solchen Menge zugesetzt wird, dass die durchschnittliche Gesamtkonzentration der Verbindung der Formel (I) in dem im Wasser-Dampf-System enthaltenen Wasser im Bereich von 0,05 bis 5 mg/kg liegt, vorzugsweise im Bereich von 0,1 bis 5 mg/kg, insbesondere im Bereich von 0,5 bis 5 mg/kg und ganz insbesondere im Bereich von 0,5 bis 3,5 mg/kg.

4.  Verfahren nach Anspruch 3, wobei die N-Acylsarcosinverbindung der Formel (I), eine Mischung verschiedener N-Acylsarcosinverbindungen der Formel (I) oder ein Salz davon dem zum Betrieb des Wasser-Dampf-Systems verwendeten Wasser in einer solchen Menge zugesetzt wird, dass die durchschnittliche Gesamtkonzentration der Verbindung der Formel (I) in dem im Wasser-Dampf-System enthaltenen Wasser im Bereich von 0,5 bis 3 mg/kg liegt, insbesondere im Bereich von 0,8 bis 2,5 mg/kg.

5.  Verfahren nach einem der vorhergehenden Ansprüche zur Bereitstellung von Korrosionsschutz für diejenigen Teile des unter Druck stehenden Wasser-Dampf-Systems, die sich im Kontakt mit Dampf und/oder mit dem Kondensat befinden; insbesondere mit dem Dampf und gegebenenfalls außerdem mit dem Kondensat.

6.  Verfahren nach einem der vorhergehenden Ansprüche, wobei das unter Druck stehende Wasser-Dampf-System innere Oberflächen enthält, die aus eisenhaltigen Materialien, insbesondere Stahl; Kupfer, Kupferlegierungen, Aluminium, Aluminiumlegierungen oder zwei oder mehr dieser Materialien, insbesondere Stahl, Kupfer oder sowohl Stahl als auch Kupfer, hergestellt sind oder diese umfassen.

7.  Verfahren nach einem der vorhergehenden Ansprüche, wobei R in Formel (I) aus der aus $C_{12}$-$C_{20}$-Alkyl und $C_{12}$-$C_{20}$-Alkenyl mit 1, 2 oder 3 C=C-Doppelbindungen bestehenden Gruppe ausgewählt ist, wobei bei der Verwendung einer Mischung verschiedener N-Acylsarcosinverbindungen der Formel (I) in bis zu 25 Gew.-% der N-Acylsarcosinverbindungen (I), bezogen auf das Gesamtgewicht der Mischung, R auch für $C_5$-$C_9$-Alkyl stehen kann; und in bis zu 55 Gew.-% der N-Acylsarcosinverbindungen (I), bezogen auf das Gesamtgewicht der Mischung, R auch aus der aus $C_{10}$-$C_{11}$-Alkyl und $C_{10}$-$C_{11}$-Alkenyl mit 1 C=C-Doppelbindung bestehenden Gruppe ausgewählt sein kann.

8. Verfahren nach einem der vorhergehenden Ansprüche, wobei R in Formel (I) durchschnittlich 12 bis 18 Kohlenstoffatome aufweist.

9. Verfahren nach einem der vorhergehenden Ansprüche, umfassend die Zugabe einer N-Acylsarcosinverbindung der Formel (I) oder eines Salzes davon, in welcher/welchem sich R von Ölsäure ableitet, oder umfassend die Zugabe einer Mischung verschiedener N-Acylsarcosinverbindungen der Formel (I) oder Salzen davon, wobei die Mischung aus Kokosnussöl stammt.

10. Verfahren nach einem der vorhergehenden Ansprüche, wobei die Verbindung der Formel (I) dem zum Betrieb des Wasser-Dampf-Systems verwendeten Wasser in Form einer wässrigen Lösung oder Emulsion der Säureform der Verbindung der Formel (I) oder eines Ammonium- oder substituierten Ammoniumsalzes davon zugesetzt wird;

 wobei die Konzentration der Verbindung der Formel (I) in der wässrigen Lösung oder Emulsion vorzugsweise im Bereich von 0,5 bis 10 Gew.-% liegt, berechnet als die Säureform der Verbindung der Formel (I) und bezogen auf das Gesamtgewicht der wässrigen Lösung oder Emulsion; und/oder
 wobei die wässrige Lösung oder Emulsion vorzugsweise zu mindestens 99,9 % aus einer aus der Verbindung der Formel (I), Wasser und gegebenenfalls außerdem Ammoniak und/oder mindestens einem organischem Amin bestehenden Mischung besteht.

11. Verfahren nach einem der vorhergehenden Ansprüche, wobei der Druck in dem Wasser-Dampf-System während des Betriebs mindestens 2 MPa (20 bar) beträgt, vorzugsweise mindestens 3 MPa (30 bar).

12. Verfahren nach einem der vorhergehenden Ansprüche, wobei es sich bei dem Wasser-Dampf-System um einen Wasser-Dampf-Kreislauf handelt.

13. Verfahren nach einem der vorhergehenden Ansprüche, wobei das Wasser-Dampf-System einen Kessel umfasst, insbesondere einen Trommelkessel oder einen Durchlaufdampferzeuger;

 wobei es sich bei dem Wasser-Dampf-System vorzugsweise um einen Wasser-Dampf-Kreislauf handelt, wobei während des Betriebs des Wasser-Dampf-Kreislaufs ein pH-Wert des Wassers im Bereich von pH 7,5 bis 12, vorzugsweise im Bereich von 8,0 bis 11, insbesondere im Bereich von pH 8,5 bis 10, bestimmt bei 20 °C, aufrechterhalten wird; und/oder
 wobei es sich bei dem Wasser-Dampf-System vorzugsweise um einen Wasser-Dampf-Kreislauf handelt, wobei während des Betriebs des Wasser-Dampf-Kreislaufs das im Wasser-Dampf-Zyklus enthaltene Wasser eine Leitfähigkeit von höchstens 30 pS/cm, bestimmt bei 22 °C, aufweist.

14. Verfahren nach einem der vorhergehenden Ansprüche, zur Bereitstellung von Korrosionsschutz für ein unter Druck stehendes Wasser-Dampf-System, das zur Erzeugung von Dampf für die direkte oder indirekte Verarbeitung von Nahrungsmitteln, Kosmetika oder Pharmazeutika verwendet wird.

15. Verfahren nach einem der Ansprüche 1 bis 11, wobei die N-Acylsarcosinverbindung oder eine Mischung verschiedener N-Acylsarcosinverbindungen der Formel (I) oder ein Salz davon in die Förderbohrung eines geothermischen Kraftwerks gegeben wird.

16. Verwendung einer N-Acylsarcosinverbindung oder einer Mischung von N-Acylsarcosinverbindungen der Formel (I) oder eines Salzes davon, wie in einem der Ansprüche 1 oder 7 bis 9 definiert, zur Bereitstellung von Korrosionsschutz für ein unter Druck stehendes Wasser-Dampf-System, wobei der Druck in dem Wasser-Dampf-System während des Betriebs mindestens 1 MPa (10 bar) beträgt, wobei jedoch, wenn es sich bei dem Wasser-Dampf-System um ein geothermales System handelt, der Druck 0,2 bis 6 MPa (2 bis 60 bar) beträgt; wobei die Verwendung die Zugabe der N-Acylsarcosinverbindung oder einer Mischung verschiedener N-Acylsarcosinverbindungen der Formel (I) oder eines Salzes davon zu dem für den Betrieb des Wasser-Dampf-Systems verwendeten Wasser in einer solchen Menge umfasst, dass die durchschnittliche Gesamtkonzentration der Verbindung der Formel (I) in dem im Wasser-Dampf-System enthaltenen Wasser im Bereich von 0,01 bis 10 mg/kg liegt, vorzugsweise im Bereich von 0,01 bis 8 mg/kg, besonders bevorzugt im Bereich von 0,02 bis 6 mg/kg, noch mehr bevorzugt im Bereich von 0,02 bis 5 mg/kg, insbesondere im Bereich von 0,05 bis 5 mg/kg, ganz insbesondere im Bereich von 0,1 bis 5 mg/kg, noch mehr insbesondere im Bereich von 0,5 bis 5 mg/kg, sehr insbesondere im Bereich von 0,5 bis 3,5 mg/kg, speziell im Bereich von 0,5 bis 3 mg/kg und ganz speziell im Bereich von 0,8 bis 2,5 mg/kg.

**17.** Verfahren zur Bestimmung der Konzentration einer wie in einem der Ansprüche 1 oder 7 oder 9 definierten Verbindung der Formel (I) in einer wässrigen Lösung oder Emulsion der Verbindung der Formel (I), welches die folgenden Schritte umfasst:

i) die Zugabe eines kationischen Phenothiazinfarbstoffs zu einer definierten Menge der die Verbindung der Formel (I) oder ein Salz davon enthaltenden wässrigen Lösung oder Emulsion;
ii) das Unterziehen der Mischung aus Schritt i) einer Extraktion mit einem flüssigen Extraktionsmittel, wobei mindestens 95 Gew.-% der Gesamtmenge des Extraktionsmittels aus einem Ce- $C_{10}$-Alkanol, insbesondere 1-Nonanol, besteht;
iii) das Abtrennen des flüssigen Extraktionsmittels von der wässrigen Phase und
iv) die photometrische Bestimmung der Konzentration des Phenothiazinfarbstoffs im Extraktionsmittel.

**18.** Verfahren nach Anspruch 17, wobei eine, zwei, drei oder alle vier Bedingungen a), b), c) und/oder d) erfüllt sind:

a) vor der Extraktion wird der pH-Wert der wässrigen Lösung oder Emulsion der Verbindung der Formel (I) auf einen pH-Wert im Bereich von 6,5 bis 7,5, insbesondere im Bereich von 6,9 bis 7,1, bestimmt bei 20 °C, eingestellt;
b) vor der Extraktion wird der pH-Wert der wässrigen Lösung oder Emulsion der Verbindung der Formel (I) mit einem anorganischen Puffer auf einen pH-Wert im Bereich von 6,5 bis 7,5, insbesondere im Bereich von 6,9 bis 7,1, bestimmt bei 20 °C, eingestellt;
c) bei dem kationischen Phenothiazinfarbstoff handelt es sich um Methylenblau; und/oder
d) die zu analysierende wässrige Lösung oder Emulsion der Verbindung der Formel (I) hat eine Konzentration an der Verbindung der Formel (I) von mindestens 0,01 mg/kg, vorzugsweise mindestens 0,05 mg/kg, insbesondere mindestens 0,1 mg/kg, berechnet als die Säureform der Verbindung der Formel (I) und bezogen auf das Gesamtgewicht der wässrigen Lösung oder Emulsion.

**Revendications**

**1.** Procédé pour fournir une protection contre la corrosion à un système eau-vapeur sous pression, lequel procédé comprend l'ajout d'un composé de type N-acylsarcosine de la formule (I) ou d'un mélange de différents composés de type N-acylsarcosine de la formule (I)

$$R\text{-}C(=O)\text{-}N(CH_3)\text{-}CH_2\text{-}COOH \qquad (I)$$

où R est un groupe hydrocarboné acyclique linéaire ou ramifié ayant 10 à 24 atomes de carbone, ou d'un sel correspondant ; où dans le cas où un mélange de différents composés de type N-acylsarcosine de la formule (I) est utilisé, en jusqu'à 30 % en poids des composés de type N-acylsarcosine (I), sur la base du poids total du mélange, R peut également être un groupe hydrocarboné acyclique linéaire ou ramifié ayant 4 à 9 atomes de carbone ;
où le composé de type N-acylsarcosine de la formule (I), un mélange de différents composés de type N-acylsarcosine de la formule (I) ou un sel correspondant est ajouté à l'eau utilisée pour faire fonctionner le système eau-vapeur en une telle quantité que la concentration moyenne totale du composé de formule (I) dans l'eau contenue dans le système eau-vapeur soit dans la plage de 0,01 à 10 mg/kg ;
où la pression dans le système eau-vapeur pendant le fonctionnement est d'au moins 1 MPa (10 bars) ;
où cependant dans le cas où le système eau-vapeur est un système géothermique, la pression est de 0,2 à 6 MPa (2 à 60 bars).

**2.** Procédé selon la revendication 1, où le composé de type N-acylsarcosine de la formule (I), un mélange de différents composés de type N-acylsarcosine de la formule (I) ou un sel correspondant est ajouté à l'eau utilisée pour faire fonctionner le système eau-vapeur en une telle quantité que la concentration moyenne totale du composé de formule (I) dans l'eau contenue dans le système eau-vapeur soit dans la plage de 0,01 à 8 mg/kg, en particulier dans la plage de 0,02 à 6 mg/kg.

**3.** Procédé selon la revendication 2, où le composé de type N-acylsarcosine de la formule (I), un mélange de différents composés de type N-acylsarcosine de la formule (I) ou un sel correspondant est ajouté à l'eau utilisée pour faire fonctionner le système eau-vapeur en une telle quantité que la concentration moyenne totale du composé de formule (I) dans l'eau contenue dans le système eau-vapeur soit dans la plage de 0,05 à 5 mg/kg, préférablement dans la plage de 0,1 à 5 mg/kg, en particulier dans la plage de 0,5 à 5 mg/kg et plus particulièrement dans la plage de 0,5 à 3,5 mg/kg.

4. Procédé selon la revendication 3, où le composé de type N-acylsarcosine de la formule (I), un mélange de différents composés de type N-acylsarcosine de la formule (I) ou un sel correspondant est ajouté à l'eau utilisée pour faire fonctionner le système eau-vapeur en une telle quantité que la concentration moyenne totale du composé de formule (I) dans l'eau contenue dans le système eau-vapeur soit dans la plage de 0,5 à 3 mg/kg, en particulier dans la plage de 0,8 à 2,5 mg/kg.

5. Procédé selon l'une quelconque des revendications précédentes, pour la fourniture d'une protection contre la corrosion à ces parties du système eau-vapeur sous pression qui sont en contact avec de la vapeur et/ou avec le condensat ; en particulier avec la vapeur et éventuellement également avec le condensat.

6. Procédé selon l'une quelconque des revendications précédentes, où le système eau-vapeur sous pression contient des surfaces internes composées de, ou comprenant des, matériaux ferreux, en particulier de l'acier ; du cuivre, des alliages de cuivre, de l'aluminium, des alliages d'aluminium ou deux ou plus de ces matériaux, en particulier de l'acier, du cuivre ou à la fois de l'acier et du cuivre.

7. Procédé selon l'une quelconque des revendications précédentes, où R dans la formule (I) est choisi dans le groupe constitué par $C_{12\text{-}20}$-alkyle et $C_{12\text{-}20}$-alcényle ayant 1, 2 ou 3 doubles liaisons C=C, où dans le cas où un mélange de différents composés de type N-acylsarcosine de la formule (I) est utilisé, en jusqu'à 25 % en poids des composés de type N-acylsarcosine (I), sur la base du poids total du mélange, R peut également être $C_{5\text{-}9}$ alkyle ; et en jusqu'à 55 % en poids des composés de type N-acylsarcosine (I), sur la base du poids total du mélange, R peut également être choisi dans le groupe constitué par $C_{10\text{-}11}$-alkyle et $C_{10\text{-}11}$-alcényle ayant 1 double liaison C=C.

8. Procédé selon l'une quelconque des revendications précédentes, où R dans la formule (I) possède en moyenne 12 à 18 atomes de carbone.

9. Procédé selon l'une quelconque des revendications précédentes, comprenant l'ajout d'un composé de type N-acylsarcosine de la formule (I) ou d'un sel correspondant dans lequel R est issu de l'acide oléique, ou comprenant l'ajout d'un mélange de différents composés de type N-acylsarcosine de la formule (I) ou de sels correspondants, où le mélange est issu d'huile de noix de coco.

10. Procédé selon l'une quelconque des revendications précédentes, où le composé de la formule (I) est ajouté à l'eau utilisée pour faire fonctionner le système eau-vapeur sous la forme d'une solution ou d'une émulsion aqueuse de la forme acide du composé de la formule (I) ou d'un sel d'ammonium ou d'ammonium substitué correspondant ;

où préférablement la concentration du composé de la formule (I) dans la solution ou l'émulsion aqueuse est dans la plage de 0,5 à 10 % en poids, calculée en tant que la forme acide du composé de formule (I) et basée sur le poids total de la solution ou de l'émulsion aqueuse ; et/ou
où préférablement la solution ou l'émulsion aqueuse est constituée d'au moins 99,9 % d'un mélange constitué du composé de formule (I), d'eau et éventuellement également d'ammoniaque et/ou d'au moins une amine organique.

11. Procédé selon l'une quelconque des revendications précédentes, où la pression dans le système eau-vapeur pendant le fonctionnement est d'au moins 2 MPa (20 bars), préférablement d'au moins 3 MPa (30 bars).

12. Procédé selon l'une quelconque des revendications précédentes, où le système eau-vapeur est un circuit d'eau-vapeur.

13. Procédé selon l'une quelconque des revendications précédentes, où le système eau-vapeur comprend une chaudière, en particulier une chaudière à tambour ou un générateur de vapeur en continu ;

où préférablement le système eau-vapeur est un circuit d'eau-vapeur, où pendant le fonctionnement du circuit d'eau-vapeur une valeur de pH de l'eau dans la plage de pH 7,5 à 12, préférablement dans la plage de 8,0 à 11, en particulier dans la plage de pH 8,5 à 10, comme déterminée à 20 °C, est maintenue ; et/ou
où préférablement le système eau-vapeur est un circuit d'eau-vapeur, où pendant le fonctionnement du circuit d'eau-vapeur l'eau contenue dans le cycle d'eau-vapeur possède une conductivité d'au plus 30 pS/cm comme déterminée à 22 °C.

**14.** Procédé selon l'une quelconque des revendications précédentes, pour la fourniture d'une protection contre la corrosion à un système eau-vapeur sous pression utilisé pour générer de la vapeur pour la transformation directe ou indirecte de produits alimentaires, de produits cosmétiques ou de produits pharmaceutiques.

**15.** Procédé selon l'une quelconque des revendications 1 à 11, où le composé de type N-acylsarcosine ou un mélange de différents composés de type N-acylsarcosine de la formule (I) ou un sel correspondant est ajouté au puits de production d'une centrale géothermique.

**16.** Utilisation d'un composé de type N-acylsarcosine ou d'un mélange de composés de type N-acylsarcosine de la formule (I) ou d'un sel correspondant tel que défini dans l'une quelconque des revendications 1 ou 7 à 9 pour la fourniture d'une protection contre la corrosion à un système eau-vapeur sous pression où la pression dans le système eau-vapeur pendant le fonctionnement est d'au moins 1 MPa (10 bars), où cependant dans le cas où le système eau-vapeur est un système géothermique, la pression est de 0,2 à 6 MPa (2 à 60 bars) ; où l'utilisation comprend l'ajout du composé de type N-acylsarcosine ou d'un mélange de différents composés de type N-acylsarcosine de la formule (I) ou d'un sel correspondant à l'eau utilisée pour faire fonctionner le système eau-vapeur en une telle quantité que la concentration moyenne totale du composé de formule (I) dans l'eau contenue dans le système eau-vapeur soit dans la plage allant de 0,01 à 10 mg/kg, préférablement dans la plage allant de 0,01 à 8 mg/kg, plus préférablement dans la plage allant de 0,02 à 6 mg/kg, encore plus préférablement dans la plage allant de 0,02 à 5 mg/kg, en particulier dans la plage allant de 0,05 à 5 mg/kg, plus particulièrement dans la plage allant de 0,1 à 5 mg/kg, encore plus particulièrement dans la plage allant de 0,5 à 5 mg/kg, tout particulièrement dans la plage allant de 0,5 à 3,5 mg/kg, spécifiquement dans la plage allant de 0,5 à 3 mg/kg, et plus spécifiquement dans la plage de 0,8 à 2,5 mg/kg.

**17.** Procédé pour la détermination de la concentration d'un composé de la formule (I) tel que défini dans l'une quelconque des revendications 1 ou 7 ou 9 dans une solution ou une émulsion aqueuse du composé de la formule (I), qui comprend les étapes suivantes :

i) ajout d'un colorant de phénothiazine cationique à une quantité définie de la solution ou de l'émulsion aqueuse contenant le composé de la formule (I) ou un sel correspondant ;
ii) soumission du mélange de l'étape i) à une extraction avec un agent d'extraction liquide, qui comprend au moins 95 % en poids de la quantité totale de l'agent d'extraction d'un $C_{8-10}$ alcanol, en particulier le 1-nonanol ;
iii) séparation de l'agent d'extraction liquide de la phase aqueuse et
iv) détermination de manière photométrique de la concentration du colorant de phénothiazine dans l'agent d'extraction.

**18.** Procédé selon la revendication 17, où une, deux, trois ou la totalité des quatre conditions suivantes a), b), c) et/ou d) s'applique(nt) :

a) avant l'extraction le pH de la solution ou de l'émulsion aqueuse du composé de la formule (I) est ajusté jusqu'à un pH dans la plage de 6,5 à 7,5, en particulier dans la plage de 6,9 à 7,1, comme déterminé à 20 °C ;
b) avant l'extraction le pH de la solution ou de l'émulsion aqueuse du composé de la formule (I) est ajusté jusqu'à un pH dans la plage de 6,5 à 7,5, en particulier dans la plage de 6,9 à 7,1, comme déterminé à 20 °C avec un tampon inorganique ;
c) le colorant de phénothiazine cationique est le bleu de méthylène ; et/ou
d) la solution ou l'émulsion aqueuse du composé de la formule (I) devant être analysée a une concentration du composé de la formule (I) d'au moins 0,01 mg/kg, préférablement d'au moins 0,05 mg/kg, en particulier d'au moins 0,1 mg/kg, calculée en tant que la forme acide du composé de formule (I) et basée sur le poids total de la solution ou de l'émulsion aqueuse.

[Fig. 1]

Figure 1

[Fig. 2]

Figure 2

[Fig. 3]

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 1916628 A
- JP S57185988 A
- EP 1092788 A
- JP S6013084 A
- JP S63216985 A
- WO 2005052213 A2
- US 5397534 A
- DE 1916628
- EP 1092788 A2

### Non-patent literature cited in the description

- **B. WYRWAS et al.** *J. Surfact. Deterg.,* 2014, vol. 17, 191-198
- *IAPWS Technical Guidance Document,* 2016, vol. 8, 16
- **S. CHITIKELA et al.** *Analyst,* July 1995, vol. 120, 2001-2004
- **M. LENDI et al.** *Power Plant Chemistry,* 2015, vol. 17 (1), 8-13
- **A. BURSIK et al.** *Power Plant Chemistry,* 2015, vol. 17 (6), 342-353
- **C. FORET et al.** *Power Plant Chemistry,* 2014, vol. 16 (5), 284-292